(19) Europäisches Patentamt
European Patent Office
Office européen des brevets

(11) EP 1 268 649 B1

(12) FASCICULE DE BREVET EUROPEEN

(45) Date de publication et mention de la délivrance du brevet: **26.11.2003 Bulletin 2003/48**

(21) Numéro de dépôt: **01901187.3**

(22) Date de dépôt: **22.01.2001**

(51) Int Cl.7: **C08K 5/54**, C08K 5/3432, C08L 21/00

(86) Numéro de dépôt international: **PCT/EP01/00661**

(87) Numéro de publication internationale: **WO 01/055252 (02.08.2001 Gazette 2001/31)**

(54) **COMPOSITION DE CAOUTCHOUC POUR PNEUMATIQUE COMPORTANT UNE CHARGE INORGANIQUE RENFORCANTE ET UN SYSTEME DE COUPLAGE (CHARGE INORGANIQUE/ELASTOMERE)**

KAUTSCHUKZUSAMMENSETZUNG FÜR REIFEN, DIE EINEN ANORGANISCHEN VERSTÄRKENDEN FÜLLSTOFF UND EIN KUPPLUNGSSYSTEM (ANORGANISCHER FÜLLSTOFF/ELASTOMER) ENTHÄLT

RUBBER COMPOSITION FOR TYRES COMPRISING A REINFORCING INORGANIC FILLER AND AN (INORGANIC FILLER/ELASTOMER) COUPLING SYSTEM

(84) Etats contractants désignés:
**AT BE CH CY DE DK ES FI FR GB GR IE IT LI LU MC NL PT SE TR**

(30) Priorité: **24.01.2000 FR 0001809**

(43) Date de publication de la demande:
**02.01.2003 Bulletin 2003/01**

(73) Titulaires:
- **Sociéte de Technologie Michelin 63000 Clermont-Ferrand Cedex 09 (FR)**
- **MICHELIN RECHERCHE ET TECHNIQUE S.A. CH-1763 Granges-Paccot (CH)**

(72) Inventeurs:
- **PENOT, Christophe F-37700 Saint Pierre des Corps (FR)**
- **ROY, Vanessa F-63000 Clermont-Ferrand (FR)**

(74) Mandataire: **Ribière, Joel M.F.P. Michelin, SGD/LG/PI - F35 - Ladoux 63040 Clermont-Ferrand Cedex 9 (FR)**

(56) Documents cités:
**EP-A- 0 784 072**
**FR-A- 2 765 881**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

La présente invention se rapporte aux compositions de caoutchoucs diéniques renforcées d'une charge blanche ou inorganique, destinées particulièrement à la fabrication de pneumatiques ou de produits semi-finis pour pneumatiques, notamment aux bandes de roulement de ces pneumatiques.

Depuis que les économies de carburant et la nécessité de protéger l'environnement sont devenues une priorité, il est souhaitable de produire des élastomères possédant de bonnes propriétés mécaniques et une hystérèse aussi faible que possible afin de pouvoir les mettre en oeuvre sous forme de compositions caoutchouteuses utilisables pour la fabrication de divers produits semi-finis entrant dans la constitution de pneumatiques tels que par exemple des sous-couches, des gommes de calandrage ou de flancs ou des bandes de roulement et obtenir des pneumatiques aux propriétés améliorées, possédant notamment une résistance au roulement réduite.

Pour atteindre un tel objectif de nombreuses solutions ont été proposées, tout d'abord essentiellement concentrées sur l'utilisation d'élastomères modifiés au moyen d'agents tels que des agents de couplage, d'étoilage ou de fonctionnalisation, avec du noir de carbone comme charge renforçante dans le but d'obtenir une bonne interaction entre l'élastomère modifié et le noir de carbone. On sait en effet, d'une manière générale, que pour obtenir les propriétés de renforcement optimales conférées par une charge, il convient que cette dernière soit présente dans la matrice élastomérique sous une forme finale qui soit à la fois la plus finement divisée possible et répartie de la façon la plus homogène possible. Or, de telles conditions ne peuvent être réalisées que dans la mesure où la charge présente une très bonne aptitude, d'une part à s'incorporer dans la matrice lors du mélange avec l'élastomère et à se désagglomérer, d'autre part à se disperser de façon homogène dans cette matrice.

De manière tout à fait connue, le noir de carbone présente de telles aptitudes, ce qui n'est en général pas le cas des charges blanches ou inorganiques. Pour des raisons d'affinités réciproques, les particules de charge inorganique ont une fâcheuse tendance, dans la matrice élastomérique, à s'agglomérer entre elles. Ces interactions ont pour conséquence néfaste de limiter la dispersion de la charge et donc les propriétés de renforcement à un niveau sensiblement inférieur à celui qu'il serait théoriquement possible d'atteindre si toutes les liaisons (charge inorganique/élastomère) susceptibles d'être créées pendant l'opération de mélangeage, étaient effectivement obtenues ; ces interactions tendent d'autre part à augmenter la consistance des compositions caoutchouteuses et donc à rendre leur mise en oeuvre ("processabilité") à l'état cru plus difficile qu'en présence de noir de carbone.

L'intérêt pour les compositions de caoutchouc renforcées de charge inorganique a été cependant fortement relancé avec la publication de la demande de brevet européen EP-A-0 501 227 qui divulgue une composition de caoutchouc diénique vulcanisable au soufre, renforcée d'une silice précipitée particulière du type hautement dispersible, qui permet de fabriquer un pneumatique ou une bande de roulement ayant une résistance au roulement nettement améliorée, sans affecter les autres propriétés en particulier celles d'adhérence, d'endurance et de résistance à l'usure. Les demandes EP-A-0 810 258 et WO99/28376 divulguent quant à elles des compositions de caoutchouc diénique renforcées d'autres charges inorganiques particulières, en l'occurrence des alumines ou des (oxyde-)hydroxydes d'aluminium spécifiques, à dispersibilité élevée, qui permettent elles aussi l'obtention de pneumatiques ou de bandes de roulement ayant un tel excellent compromis de propriétés contradictoires.

L'utilisation de ces charges inorganiques spécifiques, siliceuses ou alumineuses, hautement renforçantes, a certes réduit les difficultés de mise en oeuvre des compositions de caoutchouc les contenant, mais cette mise en oeuvre reste néanmoins plus difficile que pour les compositions de caoutchouc chargées conventionnellement de noir de carbone.

En particulier, il est nécessaire d'utiliser un agent de couplage, encore appelé agent de liaison, qui a pour fonction d'assurer la connexion entre la surface des particules de charge inorganique et l'élastomère, tout en facilitant la dispersion de cette charge inorganique au sein de la matrice élastomérique.

Par agent de "couplage" (charge inorganique/élastomère), on entend de manière connue un agent apte à établir une connexion suffisante, de nature chimique et/ou physique, entre la charge inorganique et l'élastomère ; un tel agent de couplage, au moins bifonctionnel, a par exemple comme formule générale simplifiée « Y-T-X », dans laquelle:

- Y représente un groupe fonctionnel (fonction "Y") qui est capable de se lier physiquement et/ou chimiquement à la charge inorganique, une telle liaison pouvant être établie, par exemple, entre un atome de silicium de l'agent de couplage et les groupes hydroxyle (OH) de surface de la charge inorganique (par exemple les silanols de surface lorsqu'il s'agit de silice);
- X représente un groupe fonctionnel (fonction "X") capable de se lier physiquement et/ou chimiquement à l'élastomère, par exemple par l'intermédiaire d'un atome de soufre;
- T représente un groupe hydrocarboné permettant de relier Y et X.

Les agents de couplage ne doivent en particulier pas être confondus avec de simples agents de recouvrement

de charge inorganique qui, de manière connue, peuvent comporter la fonction Y active vis-à-vis de la charge inorganique mais sont dépourvus de la fonction X active vis-à-vis de l'élastomère.

Des agents de couplage silice/élastomère, notamment, ont été décrits dans un grand nombre de documents, les plus connus étant des alkoxysilanes bifonctionnels.

Ainsi il a été proposé dans la demande de brevet FR-A-2 094 859 d'utiliser un mercaptosilane pour la fabrication de bandes de roulement de pneumatiques. Il fut rapidement mis en évidence et il est aujourd'hui bien connu que les mercaptosilanes, et en particulier le γ-mercaptopropyltriméthoxysilane ou le γ-mercaptopropyltriéthoxysilane, sont susceptibles de procurer d'excellentes propriétés de couplage silice/élastomère, mais que l'utilisation industrielle de ces agents de couplage n'est pas possible en raison de la forte réactivité des fonctions -SH conduisant très rapidement au cours de la préparation de la composition de caoutchouc dans un mélangeur interne à des vulcanisations prématurées, appelées encore "grillage" ("scorching"), à des plasticités Mooney très élevées, en fin de compte à des compositions de caoutchouc quasiment impossibles à travailler et à mettre en oeuvre industriellement. Pour illustrer cette impossibilité d'utiliser industriellement de tels agents de couplage porteurs de fonctions -SH, et les compositions de caoutchouc les contenant, on peut citer par exemple les documents FR-A-2 206 330, US-A-4 002 594.

Pour remédier à cet inconvénient, il a été proposé de remplacer ces mercaptosilanes par des alkoxysilanes polysulfurés, notamment des polysulfures de bis-alkoxyl($C_1$-$C_4$)silylpropyle tels que décrits dans de nombreux brevets ou demandes de brevet (voir par exemple FR-A-2 206 330, US-A-3 842 111, US-A-3 873 489, US-A-3 978 103, US-A-3 997 581). Ces alkoxysilanes polysulfurés sont généralement considérés aujourd'hui comme les produits apportant, pour des vulcanisats chargés à la silice, le meilleur compromis en terme de sécurité au grillage, de facilité de mise en oeuvre et de pouvoir renforçant. Parmi ces polysulfures, doivent être cités notamment le disulfure de bis 3-triéthoxysilylpropyle (en abrégé TESPD), plus particulièrement le tétrasulfure de bis 3-triéthoxysilylpropyle (en abrégé TESPT) qui est connu à ce jour comme l'agent de couplage (charge inorganique/élastomère diénique) le plus efficace (et donc le plus utilisé) dans les compositions de caoutchouc pour pneumatiques, notamment celles destinées à constituer des bandes de roulement ; il est commercialisé par exemple sous la dénomination "Si69" par la société Degussa.

Or, la Demanderesse a découvert lors de ses recherches que l'utilisation d'une 1,2-dihydropyridine en faible quantité, en combinaison avec un dérivé guanidique, a pour effet inattendu d'activer la fonction de couplage des alkoxysilanes polysulfurés, c'est-à-dire d'augmenter encore l'efficacité de ces derniers.

Grâce à cette activation, on peut désormais envisager de réduire de manière sensible la quantité d'alkoxysilanes polysulfurés habituellement utilisée. Ceci est particulièrement avantageux car ces alkoxysilanes sont d'une part très coûteux et doivent d'autre part être utilisés en une quantité importante, de l'ordre de deux à trois fois plus que la quantité de γ-mercaptopropyltrialkoxysilanes nécessaire pour obtenir des niveaux de propriétés de couplage équivalentes ; ces inconvénients bien connus ont été décrits par exemple dans les brevets US-A-5 652 310, US-A-5 684 171, US-A-5 684 172. Ainsi, le coût global des compositions de caoutchouc peut être notablement abaissé, ainsi que celui des pneumatiques qui les comportent.

En conséquence, un premier objet de l'invention concerne une composition de caoutchouc utilisable pour la fabrication de pneumatiques, à base d'au moins (i) un élastomère diénique, (ii) une charge inorganique à titre de charge renforçante, (iii) un alkoxysilane polysulfuré à titre d'agent de couplage (charge inorganique/élastomère diénique) auquel sont associés (iv) une 1,2-dihydropyridine et (v) un dérivé guanidique.

L'invention a également pour objet l'utilisation d'une composition de caoutchouc conforme à l'invention pour la fabrication d'articles en caoutchouc, en particulier de pneumatiques ou de produits semi-finis destinés à ces pneumatiques, ces produits semi-finis étant choisis en particulier dans le groupe constitué par les bandes de roulement, les sous-couches destinées par exemple à être placées sous ces bandes de roulement, les nappes sommet, les flancs, les nappes carcasse, les talons, les protecteurs, les chambres à air et les gommes intérieures étanches pour pneu sans chambre.

L'invention concerne plus particulièrement l'utilisation d'une telle composition de caoutchouc, en raison de ses bonnes propriétés hystérétiques, pour la fabrication des flancs ou des bandes de roulement.

L'invention concerne également un procédé de préparation d'une composition conforme à l'invention, ce procédé étant caractérisé en ce qu'on incorpore à (i) au moins un élastomère diénique, au moins: (ii) une charge inorganique à titre de charge renforçante ; (iii) un alkoxysilane polysulfuré ; (iv) une 1,2-dihydropyridine, et (v) un dérivé guanidique, et en ce qu'on malaxe thermomécaniquement le tout, en une ou plusieurs étapes, jusqu'à atteindre une température maximale comprise entre 120°C et 190°C.

La composition conforme à l'invention est particulièrement adaptée à la confection de bandes de roulement de pneumatiques destinés à équiper des véhicules de tourisme, véhicules 4x4, camionnette, véhicules deux roues et Poids-lourds, avions, engins de génie civil, agraire ou de manutention, ces bandes de roulement pouvant être utilisées lors de la fabrication de pneumatiques neufs ou pour le rechapage de pneumatiques usagés.

L'invention a également pour objet ces pneumatiques et ces produits semi-finis en caoutchouc eux-mêmes lorsqu'ils comportent une composition de caoutchouc conforme à l'invention.

L'invention concerne en particulier les bandes de roulement de pneumatiques ; grâce aux compositions de

l'invention, ces bandes de roulement présentent à la fois une faible résistance au roulement et une résistance élevée à l'usure, même en présence d'un taux réduit d'agent de couplage alkoxysilane polysulfuré.

L'invention concerne également, en soi, un système de couplage (charge inorganique/élastomère diénique) pour composition de caoutchouc diénique renforcée d'une charge inorganique, utilisable pour la fabrication de pneumatiques, ledit système étant constitué par l'association d'un alkoxysilane polysulfuré, d'une 1,2-dihydropyridine et d'un dérivé guanidique.

L'invention a également pour objet l'utilisation d'un tel système de couplage (charge inorganique/élastomère diénique) dans une composition de caoutchouc pour pneumatique.

L'invention a d'autre part pour objet l'utilisation en combinaison d'une 1,2-dihydropyridine et d'un dérivé guanidique, dans une composition de caoutchouc renforcée d'une charge inorganique, pour activer la fonction de couplage (charge inorganique/élastomère diénique) des alkoxysilanes polysulfurés.

L'invention a enfin pour objet un procédé pour coupler une charge inorganique et un élastomère diénique, dans une composition de caoutchouc, ce procédé étant caractérisé en ce qu'on incorpore à (i) au moins un élastomère diénique, au moins: (ii) une charge inorganique à titre de charge renforçante; (iii) un alkoxysilane polysulfuré; (iv) une 1,2-dihydropyridine et (v) un dérivé guanidique, et en ce qu'on malaxe thermomécaniquement le tout, en une ou plusieurs étapes, jusqu'à atteindre une température maximale comprise entre 120°C et 190°C.

L'invention ainsi que ses avantages seront aisément compris à la lumière de la description et des exemples de réalisation qui suivent, ainsi que des figures relatives à ces exemples qui représentent des courbes de variation de module (en MPa) en fonction de l'allongement (en %) pour différentes compositions de caoutchouc diénique, conformes ou non à l'invention.

## I. MESURES ET TESTS UTILISES

Les compositions de caoutchouc sont caractérisées avant et après cuisson, comme suit.

### I-1. Plasticité Mooney

On utilise un consistomètre oscillant tel que décrit dans la norme AFNOR-NFT-43005 (Novembre 1980). La mesure de plasticité Mooney se fait selon le principe suivant : la composition à l'état cru (i.e. avant cuisson) est moulée dans une enceinte cylindrique chauffée à 100°C. Après une minute de préchauffage, le rotor tourne au sein de l'éprouvette à 2 tours /minute et on mesure le couple utile pour entretenir ce mouvement après 4 minutes de rotation. La plasticité Mooney (ML1+4) est exprimée en "unité Mooney" (UM, avec 1 UM = 0,83 Newton.mètre).

### I-2. Temps de grillage

Les mesures sont effectuées à 130°C, conformément à la norme AFNOR-NFT-43004 (Novembre 1980). L'évolution de l'indice consistométrique en fonction du temps permet de déterminer le temps de grillage des compositions de caoutchouc, apprécié conformément à la norme précitée par le paramètre T5, exprimé en minutes, et défini comme étant le temps nécessaire pour obtenir une augmentation de l'indice consistométrique (exprimée en UM) de 5 unités au dessus de la valeur minimale mesurée pour cet indice.

### I-3. Essais de traction

Ces essais de traction permettent de déterminer les contraintes d'élasticité et les propriétés à la rupture. Sauf indication différente, ils sont effectués conformément à la norme AFNOR-NFT-46002 de septembre 1988. On mesure en seconde élongation (i.e. après un cycle d'accommodation) les modules sécants nominaux (en MPa) à 10% d'allongement (notés M10), 100% d'allongement (M100) et 300% d'allongement (M300). On mesure également les contraintes à la rupture (en MPa) et les allongements à la rupture (en %). Toutes ces mesures de traction sont effectuées dans les conditions normales de température et d'hygrométrie selon la norme AFNOR-NFT-40101 (décembre 1979).

Un traitement des enregistrements de traction permet également de tracer la courbe de module en fonction de l'allongement (voir figures annexées), le module utilisé ici étant le module sécant vrai mesuré en première élongation, et calculé en se ramenant à la section réelle de l'éprouvette, et non à la section initiale comme précédemment pour les modules nominaux.

### I-4. Pertes hystérétiques

Les pertes hystérétiques (notées PH) sont mesurées par rebond à 60°C au 6ème choc, et exprimées en % selon la relation suivante ($W_0$ : énergie fournie ; $W_1$ : énergie restituée):

$$PH (\%) = 100 [(W_0 - W_1) / W_0]$$

## II. CONDITIONS DE REALISATION DE L'INVENTION

Les compositions de caoutchouc selon l'invention sont à base des constituants suivants: (i) un (au moins un) élastomère diénique (composant A), (ii) une (au moins une) charge inorganique à titre de charge renforçante (composant B), (iii) un (au moins un) alkoxysilane polysulfuré (composant C - en abrégé ASPS) en tant qu'agent de couplage (charge inorganique/élastomère diénique) auquel sont associés, pour activer le couplage, (iv) une (au moins une) 1,2-dihydropyridine (composant D - en abrégé 1,2-DHP) et (v) un (au moins un) dérivé guanidique (composant E).

Bien entendu, par l'expression composition "à base de", il faut entendre une composition comportant le mélange et/ou le produit de réaction *in situ* des différents constituants utilisés, certains de ces constituants étant susceptibles de, ou destinés à réagir entre eux, au moins en partie, lors des différentes phases de fabrication de la composition, notamment au cours de sa vulcanisation.

Le système de couplage conforme à l'invention est quant à lui constitué d'un agent de couplage ASPS, de préférence majoritaire (i.e., à plus de 50% en poids) et d'un activateur de couplage formé par l'association d'une 1,2-DHP et d'un dérivé guanidique.

### II-1. Elastomère diénique (composant A)

Par élastomère ou caoutchouc "diénique", on entend de manière connue un élastomère issu au moins en partie (i.e. un homopolymère ou un copolymère) de monomères diènes (monomères porteurs de deux doubles liaisons carbone-carbone, conjuguées ou non).

De manière générale, on entend ici par élastomère diénique "essentiellement insaturé" un élastomère diénique issu au moins en partie de monomères diènes conjugués, ayant un taux de motifs ou unités d'origine diénique (diènes conjugués) qui est supérieur à 15% (% en moles).

C'est ainsi, par exemple, que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%).

Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être mis en oeuvre dans les compositions conformes à l'invention:

(a) - tout homopolymère obtenu par polymérisation d'un monomère diène conjugué ayant de 4 à 12 atomes de carbone;

(b) - tout copolymère obtenu par copolymérisation d'un ou plusieurs diènes conjugués entre eux ou avec un ou plusieurs composés vinyle aromatique ayant de 8 à 20 atomes de carbone;

(c) - un copolymère ternaire obtenu par copolymérisation d'éthylène, d'une $\alpha$-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbomène, le dicyclopentadiène;

(d) - un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention, en particulier lorsque la composition de caoutchouc est destinée à une bande de roulement de pneumatique, est en premier lieu mise en oeuvre avec des élastomères diéniques essentiellement insaturés, en particulier du type (a) ou (b) ci-dessus.

A titre de diènes conjugués conviennent notamment le butadiène-1,3, le 2-méthyl-1,3-butadiène, les 2,3-di (alkyle en $C_1$-$C_5$)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinyle-aromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1 % et 80% en

poids d'unités vinyle-aromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation.

A titre préférentiel conviennent les polybutadiènes et en particulier ceux ayant une teneur en unités -1,2 comprise entre 4% et 80% ou ceux ayant une teneur en cis-1,4 supérieure à 80%, les polyisoprènes, les copolymères de butadiène-styrène et en particulier ceux ayant une teneur en styrène comprise entre 5% et 50% en poids et plus particulièrement entre 20% et 40%, une teneur en liaisons -1,2 de la partie butadiénique comprise entre 4% et 65% , une teneur en liaisons trans-1,4 comprise entre 20% et 80%, les copolymères de butadiène-isoprène et notamment ceux ayant une teneur en isoprène comprise entre 5% et 90% en poids et une température de transition vitreuse (Tg) de -40°C à -80°C, les copolymères isoprène-styrène et notamment ceux ayant une teneur en styrène comprise entre 5% et 50% en poids et une Tg comprise entre -25°C et -50°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur en unités -1,2 de la partie butadiénique comprise entre 4% et 85%, une teneur en unités trans -1,4 de la partie butadiénique comprise entre 6% et 80%, une teneur en unités -1,2 plus -3,4 de la partie isoprénique comprise entre 5% et 70% et une teneur en unités trans -1,4 de la partie isoprénique comprise entre 10% et 50%, et plus généralement tout copolymère butadiène-styrène-isoprène ayant une Tg comprise entre -20°C et -70°C.

En résumé, de manière particulièrement préférentielle, l'élastomère diénique de la composition conforme à l'invention est choisi dans le groupe des élastomères diéniques fortement insaturés constitué par les polybutadiènes (BR), les polyisoprènes (IR), le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

La composition conforme à l'invention est particulièrement destinée à une bande de roulement pour pneumatique, qu'il s'agisse d'un pneumatique neuf ou usagé (rechapage).

Dans le cas d'un pneumatique pour véhicule tourisme, le composant A est par exemple un SBR ou un coupage (mélange) SBR/BR, SBR/NR (ou SBR/IR), ou encore BR/NR (ou BR/IR). Dans le cas d'un élastomère SBR, on utilise notamment un SBR ayant une teneur en styrène comprise entre 20% et 30% en poids, une teneur en liaisons vinyliques de la partie butadiénique comprise entre 15% et 65%, une teneur en liaisons trans-1,4 comprise entre 15% et 75% et une Tg comprise entre -20°C et -55°C. Un tel copolymère SBR, de préférence préparé en solution, est éventuellement utilisé en mélange avec un polybutadiène (BR) possédant de préférence plus de 90% de liaisons cis-1,4.

Dans le cas d'un pneumatique pour véhicule utilitaire, notamment pour véhicule "Poids-lourd" - i.e., métro, bus, engins de transport routier (camions, tracteurs, remorques), véhicules hors-la-route -, le composant A est par exemple choisi dans le groupe constitué par le caoutchouc naturel, les polyisoprènes de synthèse, les copolymères d'isoprène (isoprène-butadiène, isoprène-styrène, butadiène-styrène-isoprène) et les mélanges de ces élastomères. Dans un tel cas, le composant A peut être aussi constitué, en tout ou partie, d'un autre élastomère fortement insaturé tel que, par exemple, un élastomère SBR.

Selon un autre mode de réalisation avantageux de l'invention, notamment lorsqu'elle est destinée à un flanc de pneumatique, la composition conforme à l'invention peut contenir au moins un élastomère diénique essentiellement saturé, en particulier au moins un copolymère EPDM, que ce copolymère soit par exemple utilisé ou non en mélange avec un ou plusieurs des élastomères diéniques fortement insaturés cités précédemment.

Bien entendu, les compositions de l'invention peuvent contenir un seul élastomère diénique ou un mélange de plusieurs élastomères diéniques, le ou les élastomères diéniques pouvant être utilisés en association avec tout type d'élastomère synthétique autre que diénique, voire avec des polymères autres que des élastomères, par exemple des polymères thermoplastiques.

II-2. Charge renforcante (composant B)

La charge blanche ou inorganique utilisée à titre de charge renforçante peut constituer la totalité ou une partie seulement de la charge renforçante totale, dans ce dernier cas associée par exemple à du noir de carbone.

De préférence, dans les compositions de caoutchouc conformes à l'invention, la charge inorganique renforçante constitue la majorité, c'est-à-dire plus de 50% en poids de la charge renforçante totale, plus préférentiellement plus de 80% en poids de cette charge renforçante totale.

Dans la présente demande, on entend par "charge inorganique renforçante", de manière connue, une charge

inorganique ou minérale, quelles que soient sa couleur et son origine (naturelle ou de synthèse), encore appelée charge "blanche" ou parfois charge "claire" par opposition au noir de carbone, cette charge inorganique étant capable de renforcer à elle seule, sans autre moyen qu'un agent de couplage intermédiaire, une composition de caoutchouc destinée à la fabrication de pneumatiques, en d'autres termes capable de remplacer, dans sa fonction de renforcement, une charge conventionnelle de noir de carbone de grade pneumatique.

Préférentiellement, la charge inorganique renforçante est une charge minérale du type siliceuse ou alumineuse, ou un mélange de ces deux types de charges.

La silice ($SiO_2$) utilisée peut être toute silice renforçante connue de l'homme du métier, notamment toute silice précipitée ou pyrogénée présentant une surface BET ainsi qu'une surface spécifique CTAB toutes deux inférieures à 450 $m^2/g$, de préférence de 30 à 400 $m^2/g$. Les silices précipitées hautement dispersibles (dites "HDS") sont préférées, en particulier lorsque l'invention est mise en oeuvre pour la fabrication de pneumatiques présentant une faible résistance au roulement ; par silice hautement dispersible, on entend de manière connue toute silice ayant une aptitude importante à la désagglomération et à la dispersion dans une matrice élastomérique, observable de manière connue par microscopie électronique ou optique, sur coupes fines. Comme exemples non limitatifs de telles silices hautement dispersibles préférentielles, on peut citer les silices BV3380 et Ultrasil 7000 de la société Degussa, les silices Zeosil 1165 MP et 1115 MP de la société Rhodia, la silice Hi-Sil 2000 de la société PPG, les silices Zeopol 8715 ou 8745 de la Société Huber, des silices précipitées traitées telles que par exemple les silices "dopées" à l'aluminium décrites dans la demande EP-A-0 735 088.

L'alumine ($Al_2O_3$) renforçante utilisée préférentiellement est une alumine hautement dispersible ayant une surface BET allant de 30 à 400 $m^2/g$, plus préférentiellement entre 60 et 250 $m^2/g$, une taille moyenne de particules au plus égale à 500 nm, plus préférentiellement au plus égale à 200 nm, telle que décrite dans la demande EP-A-0 810 258 précitée. Comme exemples non limitatifs de telles alumines renforçantes, on peut citer notamment les alumines A125 ou CR125 (société Baïkowski), APA-100RDX (société Condea), Aluminoxid C (société Degussa) ou AKP-G015 (Sumitomo Chemicals). On peut aussi mettre en oeuvre l'invention en utilisant comme charge inorganique renforçante les (oxyde-)hydroxydes d'aluminium spécifiques tels que décrits dans la demande WO99/28376.

L'état physique sous lequel se présente la charge inorganique renforçante est indifférent, que ce soit sous forme de poudre, de microperles, de granulés, ou encore de billes. Bien entendu on entend également par charge inorganique renforçante des mélanges de différentes charges inorganiques renforçantes, en particulier de charges siliceuses et/ou alumineuses hautement dispersibles telles que décrites ci-dessus.

Lorsque les compositions de caoutchouc de l'invention sont utilisées comme bandes de roulement de pneumatiques, la charge inorganique renforçante utilisée, en particulier s'il s'agit de silice, a de préférence une surface BET comprise entre 60 et 250 $m^2/g$, plus préférentiellement comprise entre 80 et 230 $m^2/g$.

La charge inorganique renforçante peut être également utilisée en coupage (mélange) avec du noir de carbone. Comme noirs de carbone conviennent tous les noirs de carbone, notamment les noirs du type HAF, ISAF, SAF, conventionnellement utilisés dans les pneumatiques et particulièrement dans les bandes de roulement de ces pneumatiques. A titre d'exemples non limitatifs de tels noirs, on peut citer les noirs N115, N134, N234, N339, N347, N375. La quantité de noir de carbone présente dans la charge renforçante totale peut varier dans de larges limites, cette quantité étant préférentiellement inférieure à la quantité de charge inorganique renforçante présente dans la composition de caoutchouc.

De manière préférentielle, le taux de charge renforçante totale (charge inorganique renforçante plus noir de carbone le cas échéant) est compris dans un domaine allant de 20 à 300 pce, plus préférentiellement de 30 à 150 pce, encore plus préférentiellement de 50 à 130 pce (parties en poids pour cent d'élastomère), l'optimum étant différent selon la nature de la charge inorganique renforçante utilisée et selon les applications visées : le niveau de renforcement attendu sur un pneumatique vélo, par exemple, est de manière connue nettement inférieur à celui exigé sur un pneumatique apte à rouler à grande vitesse de manière soutenue, par exemple un pneu moto, un pneu pour véhicule de tourisme ou pour véhicule utilitaire tel que Poids-lourd.

Pour les bandes de roulement de pneumatiques aptes à rouler à grande vitesse, la quantité de charge inorganique renforçante, en particulier s'il s'agit de silice, est de préférence comprise dans un domaine de 50 à 100 pce.

Dans le présent exposé, la surface spécifique BET est déterminée de manière connue, selon la méthode de Brunauer-Emmett-Teller décrite dans "The Journal of the American Chemical Society", vol. 60, page 309, février 1938 et correspondant à la norme AFNOR-NFT-45007 (novembre 1987); la surface spécifique CTAB est la surface externe déterminée selon la même norme AFNOR-NFT-45007 de novembre 1987.

<u>II-3. Agent de couplage (composant C)</u>

L'agent de couplage utilisé dans les compositions de caoutchouc conformes à l'invention est un ASPS, porteur de manière connue de deux types de fonctions notées ici "Y" et "X", greffable d'une part sur la charge inorganique au moyen de la fonction "Y" (fonction alkoxysilyle) et d'autre part sur l'élastomère au moyen de la fonction "X" (fonction

soufrée).

Les ASPS sont largement connus de l'homme du métier comme agents de couplage (charge inorganique/élastomère diénique) dans les compositions de caoutchouc destinées à la fabrication de pneumatiques. On utilise en particulier des alkoxysilanes polysulfurés, dits "symétriques" ou "asymétriques" selon leur structure particulière, tels que décrits dans les brevets US-A-3 842 111, US-A-3 873 489, US-A-3 978 103, US-A-3 997 581, US-A-4 002 594, US-A-4 072 701, US-A-4 129 585, ou dans les brevets ou demandes de brevet plus récents US-A-5 580 919, US-A-5 583 245, US-A-5 650 457, US-A-5 663 358, US-A-5 663 395, US-A-5 663 396, US-A-5 674 932, US-A-5 675 014, US-A-5 684 171, US-A-5 684 172, US-A-5 696 197, US-A-5 708 053, US-A-5 892 085, EP-A-1 043 357 qui décrivent en détail de tels composés connus.

Conviennent en particulier pour la mise en oeuvre de l'invention, sans que la définition ci-après soit limitative, des ASPS dits "symétriques" répondant à la formule générale (I) suivante:

$$\text{(I)} \qquad Z - A - S_n - A - Z ,$$

dans laquelle:

- n est un entier de 2 à 8 (de préférence de 2 à 5);
- A est un radical hydrocarboné divalent;
- Z répond à l'une des formules ci-après:

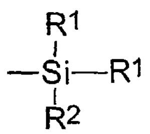 ; 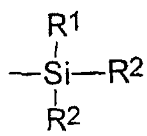 ; 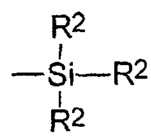 ,

dans lesquelles:

- les radicaux $R^1$, substitués ou non substitués, identiques ou différents entre eux, représentent un groupe alkyle en $C_1$-$C_{18}$, cycloalkyle en $C_5$-$C_{18}$ ou aryle en $C_6$-$C_{18}$;
- les radicaux $R^2$, substitués ou non substitués, identiques ou différents entre eux, représentent un groupe alkoxyle en $C_1$-$C_{18}$ ou cycloalkoxyle en $C_5$-$C_{18}$.

Dans le cas d'un mélange d'ASPS répondant à la formule (I) ci-dessus, notamment des mélanges usuels disponibles commercialement, on comprendra que la valeur moyenne des "n" est un nombre fractionnaire, de préférence compris dans un domaine de 2 à 5.

Le radical A, substitué ou non substitué, est de préférence un radical hydrocarboné divalent, saturé ou non saturé, comportant de 1 à 18 atomes de carbone. Conviennent notamment des groupements alkylène en $C_1$-$C_{18}$ ou des groupements arylène en $C_6$-$C_{12}$, plus particulièrement des alkylènes en $C_1$-$C_{10}$, notamment en $C_2$-$C_4$, en particulier le propylène.

Les radicaux $R^1$ sont préférentiellement des groupes alkyle en $C_1$-$C_6$, cyclohexyle ou phényle, notamment des groupes alkyle en $C_1$-$C_4$, plus particulièrement le méthyle et/ou l'éthyle. Les radicaux $R^2$ sont préférentiellement des groupes alkoxyle en $C_1$-$C_8$ ou cycloalkoxyle en $C_5$-$C_8$, plus particulièrement le méthoxyle et/ou l'éthoxyle.

Préférentiellement, l'ASPS utilisé est un polysulfure, en particulier un disulfure ou un tétrasulfure, de bis-alkoxyl($C_1$-$C_4$)silylalkyle($C_1$-$C_{10}$), plus préférentiellement encore de bis(alkoxyl($C_1$-$C_4$)silylpropyle), en particulier de bis(trialkoxyl($C_1$-$C_{10}$)silylpropyle), notamment de bis(3-triéthoxysilylpropyle) ou de bis(3-triméthoxysilylpropyle).

Le disulfure de bis(triéthoxysilylpropyle) ou TESPD, de formule $[(C_2H_5O)_3Si(CH_2)_3S]_2$, est commercialisé par exemple par la société Degussa sous les dénominations Si266 ou Si75 (dans le second cas, sous forme d'un mélange de disulfure (à 75% en poids) et de polysulfure), ou encore par la société Witco sous la dénomination Silquest A1589. Le tétrasulfure de bis(triéthoxysilylpropyle) ou TESPT, de formule $[(C_2H_5O)_3Si(CH_2)_3S_2]_2$, est commercialisé par exemple par la société Degussa sous la dénomination Si69 (ou X50S lorsqu'il est supporté à 50% en poids sur du noir de carbone), ou encore par la société Witco sous la dénomination Silquest A1289 (dans les deux cas mélange commercial de polysulfures avec une valeur moyenne pour n qui est proche de 4).

On utilise tout préférentiellement le TESPT. Mais un mode de réalisation avantageux de l'invention consiste à utiliser le TESPD, certes moins actif que le TESPT lorsqu'il est utilisé seul, mais dont l'efficacité est sensiblement améliorée par la présence de la 1,2-DHP et du dérivé guanidique.

Comme autre exemple d'organosilane ASPS, on peut citer par exemple un organosilane du type oligomérique

ou polymérique, tel que décrit par exemple dans les demandes WO96/10604 ou DE-A-44 35 311 et répondant à la formule ci-après:

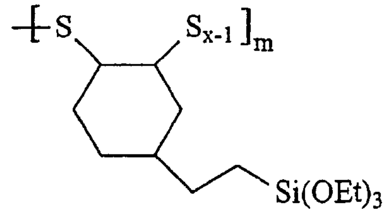

dans laquelle x = 1 à 8, m = 1 à 200, OEt représente le radical éthoxyle.

Dans les compositions de caoutchoucs conformes à l'invention, la teneur en ASPS est préférentiellement comprise entre 0,5 et 15% en poids par rapport à la quantité de charge inorganique renforçante, soit, dans la majorité des cas, entre 1 et 10 pce, plus préférentiellement entre 3 et 8 pce. Mais il est en général souhaitable d'en utiliser le moins possible. La présence de 1,2-DHP et de dérivé guanidique, dans ces compositions, permet avantageusement de pouvoir utiliser l'ASPS à un taux préférentiel inférieur à 10%, voire même inférieur à 8% en poids par rapport à la quantité de charge inorganique renforçante ; des taux compris entre 4 et 8% sont ainsi avantageusement possibles.

L'ASPS pourrait être préalablement greffé (via la fonction "X") sur l'élastomère diénique de la composition de l'invention, l'élastomère ainsi fonctionnalisé ou "précouplé" comportant alors la fonction "Y" libre pour la charge inorganique renforçante. L'ASPS pourrait également être préalablement greffé (via la fonction "Y") sur la charge inorganique renforçante, la charge ainsi "précouplée" pouvant ensuite être liée à l'élastomère diénique par l'intermédiaire de la fonction libre "X".

On préfère toutefois, notamment pour des raisons de meilleure mise en oeuvre des compositions à l'état cru, utiliser l'agent de couplage soit greffé sur la charge inorganique renforçante, soit à l'état libre (i.e., non greffé) tout comme la 1,2-DHP et le dérivé guanidique qui lui sont associés dans le système de couplage conforme à l'invention.

<u>II-4. Activation du couplage</u>

Le système de couplage selon l'invention est constitué de l'agent de couplage ASPS précédemment défini et d'un activateur de couplage de cet alkoxysilane. Par "activateur" de couplage, on entend ici un corps (un composé ou une association de composés) qui, mélangé avec l'agent de couplage, augmente l'efficacité de ce dernier.

L'activateur de couplage utilisé conformément à l'invention est formé par l'association d'une 1,2-DHP et d'un dérivé guanidique.

<u>A) 1,2-DHP (composant D)</u>

Les dihydropyridines (notées "DHP"), notamment les 1,2-dihydropyridines (ici notées "1,2-DHP") sont bien connues de l'homme du métier. Les DHP ont été essentiellement utilisées jusqu'ici comme additifs dans des compositions adhésives, agents stabilisants, activateurs de polymérisation ou encore accélérateurs de vulcanisation (voir par exemple EP-A-0 334 377 ; EP-A-0 502 733 ; EP-A-0 794 219 ; EP-A-0 867 491 ; US-A-4 450 030 ; US-A-5 747 601).

Une 1,2-DHP répond de manière connue à la formule générale (II) qui suit:

**(II)**

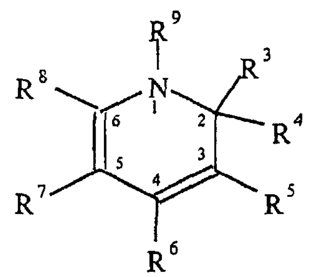

dans laquelle les radicaux $R^3$ à $R^9$, identiques ou différents entre eux, sont choisis de préférence parmi l'hydrogène,

un groupement hydrocarboné, les groupements OH, CN, $NH_2$, SH ou les halogènes.

Les radicaux $R^3$ à $R^9$ sont plus préférentiellement choisis parmi l'hydrogène et les groupements hydrocarbonés ayant de préférence de 1 à 20 atomes de carbone, ces groupements pouvant être linéaires, cycliques ou branchés, substitués ou non substitués.

A titre d'exemples de tels groupements hydrocarbonés peuvent être cités les alkyles en $C_1$-$C_{18}$, les cycloalkyles en $C_3$-$C_8$, les arylalkyles en $C_7$-$C_{20}$, les aryles en $C_6$-$C_{18}$, les alkylaryles en $C_7$-$C_{20}$, les alkényles en $C_2$-$C_{18}$, les alkoxyles (OR) en $C_1$-$C_{18}$, les groupements SR, $NR_2$, NHR, COR, COOR, COOH, $CONR_2$, CONHR, $CONH_2$, $SiR_3$, $Si(OR)_3$.

Plus préférentiellement, les radicaux $R^3$ à $R^9$ sont choisis parmi l'hydrogène, les alkyles en $C_1$-$C_{10}$ (notamment méthyle, éthyle, propyle, butyle, pentyle, hexyle, octyle), les cycloalkyles en $C_3$-$C_8$ (notamment cyclopentyle, cyclohexyle, cycloheptyle), les arylalkyles en $C_7$-$C_{12}$ (notamment benzyle, phényl-éthyle), les aryles en $C_6$-$C_{12}$ (notamment phényle, naphtyle), les alkylaryles en $C_7$-$C_{14}$ (notamment toluyle, xylyle, éthyl-phényle), les alkényles en $C_2$-$C_{10}$ (notamment propényle, buténylе). Par ailleurs, deux de ces radicaux $R^3$ à $R^9$ (par exemple $R^5$ et $R^7$) pourraient être joints pour former un cycle dans lequel pourrait figurer éventuellement un hétéroatome choisi par exemple parmi S, O et N.

La synthèse des 1,2-DHP a été exposée en détail dans "*Development in Dihydropyridine chemistry*" par J. Kuthan et A. Kurfürst, Ind. Eng. Chem. Prod. Res. Dev., 1982, 21, pp. 191-261. Elles peuvent être obtenues à partir de dérivés de la pyridine, par exemple par réduction des sels de pyridinium correspondants ou par le procédé de Hantzsch. Elles sont également synthétisées de manière connue par condensation, en présence d'un catalyseur (par exemple un acide), d'une amine primaire et d'un aldéhyde dont le Carbone en $\alpha$ de la fonction carbonyle est porteur d'au moins deux atomes d'hydrogène ; cette réaction est décrite par exemple dans Chem. Commun., 1971, 476, par H. Charman et J. Rowe et Tetrahedron Lett., 3653, (1971) par G. Krow, E. Michener et K.C. Ramey. Ainsi, dans le cas d'un tel condensat (aldéhyde-amine), les radicaux $R^6$, $R^8$ et au moins l'un des radicaux $R^3$ ou $R^4$ représentent l'hydrogène.

On sait que la réaction d'un aldéhyde sur une amine, notamment dans le cas d'un aldéhyde aliphatique, peut conduire à de nombreux produits secondaires dus à la forte propension de ces aldéhydes à se condenser sur eux-mêmes (réaction d'aldolisation décrite par exemple dans Advanced Organic Chemistry, 4th Edition, par J. March, p. 937, John Wiley & Sons). C'est la raison pour laquelle, lorsqu'on utilise la 1,2-DHP sous la forme d'un condensat aldéhyde-amine (i.e., un mélange de produits de condensation de l'aldéhyde et de l'amine), on préfère que la 1,2-DHP représente alors le constituant majoritaire (i.e., celui ayant la teneur en poids la plus élevée) du condensat.

Toute amine primaire, aliphatique ou aromatique, comportant de 1 à 18 atomes de carbone peut être utilisée, par exemple éthylamine, n-butylamine, n-pentylamine, cyclopentylamine, n-hexylamine, cyclohexylamine, n-octylamine, n-decylamine, n-dodecylamine, n-hexadecylamine, n-octadecylamine, aniline, amines toluyle ou xylyle.

Parmi les aldéhydes, on peut citer tout aldéhyde en $C_2$-$C_{12}$ (notamment acétaldéhyde, propionaldéhyde, n-butyraldéhyde, pentanal, cyclopentanal, hexanal, cyclohexanal, n-heptanal, n-decanal, n-dodecanal). On choisira plus préférentiellement, notamment pour des raisons de pureté des condensats, un aldéhyde à chaîne carbonée courte en $C_3$-$C_6$ : soit propionaldéhyde, butyraldéhyde (butanal), valéraldéhyde (pentanal) ou hexaldéhyde (hexanal).

Selon un mode particulièrement préférentiel de réalisation de l'invention, la 1,2-DHP utilisée est une N-phényl-1,2-dihydropyridine, c'est-à-dire que le radical $R^9$ est un radical phényle, substitué ou non substitué. Ceci signifie que, dans le cas d'un condensat (aldéhyde/amine), l'amine utilisée est une phénylamine (radical phényl substitué ou non substitué), en particulier l'aniline (phényl non substitué).

A titre d'exemple de 1,2-DHP utilisable dans les compositions de l'invention, on peut citer la 3,5-dipentyl-1,2-dihydro-1-phényl-2-hexylpyridine, disponible par exemple sous la forme d'un condensat heptaldéhyde-aniline, répondant à la formule (II-1) ci-dessous:

(II-1)

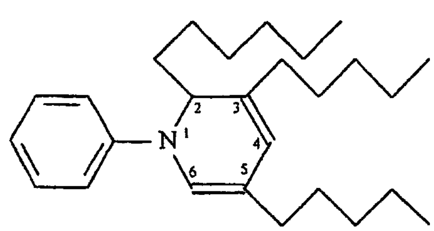

A titre d'exemple plus préférentiel, on citera la 3,5-diéthyl-1,2-dihydro-1-phényl-2-propylpyridine répondant à la formule (II-2) qui suit:

(II-2)

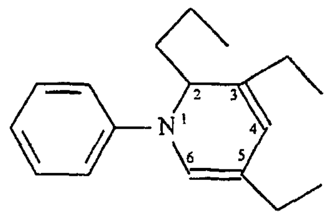

Comme exemples de condensats (aldéhyde/amine) utilisables dans les compositions de l'invention, on peut citer les condensats heptaldéhyde-aniline de la société Uniroyal Chemical (dénomination "Hepteen Base"), les condensats butyraldéhyde-aniline de la société RT Vanderbilt (par exemple dénomination "Vanax 808" - pureté en 1,2-DHP d'environ 40%) ou ceux de la société Bayer (par exemple dénomination "Vulkacit 576" - pureté en 1,2-DHP d'environ 30%), tous ces condensats étant commercialisés comme accélérateurs de vulcanisation.

On choisira de préférence des condensats (aldéhyde/amine) dont la teneur ou pureté en 1,2-DHP (% en poids) est aussi élevée que possible, de préférence supérieure à 50%, plus préférentiellement supérieure à 70%. A titre d'exemple particulièrement préférentiel, on citera le produit de condensation de l'aniline et du butyraldéhyde qui, après purification, consiste majoritairement en une 3,5-diéthyl-1,2-dihydro-1-phényl-2-propylpyridine de formule (II-2) ci-dessus ; ce produit est commercialisé par exemple par la société R.T. Vanderbilt sous la dénomination Vanax 808 HP (pureté en 1,2-DHP d'au moins 85%).

L'homme du métier, après avoir pris connaissance de l'invention, saura ajuster la teneur optimale en 1,2-DHP en fonction de l'application visée, de la charge inorganique utilisée et de la nature de l'élastomère mis en oeuvre, dans un domaine compris de préférence entre 0,1 et 3 pce, plus préférentiellement de 0,2 à 1 pce. Des taux de 0,2 à 0,6 pce sont par exemple avantageusement possibles pour les compositions destinées à des bandes de roulement de pneumatiques tourisme.

Bien entendu, la teneur optimale en 1,2-DHP sera choisie, en premier lieu, en fonction de la quantité d'ASPS utilisée. Préférentiellement, dans le système de couplage selon l'invention, la quantité de 1,2-DHP représente entre 1% et 20% en poids par rapport à la quantité d'ASPS ; en dessous des taux minima indiqués l'effet risque d'être insuffisant, alors qu'au delà des taux maxima indiqués ci-dessus on n'observe généralement plus d'amélioration du couplage alors que les coûts de la composition augmentent et que l'on risque d'autre part d'être exposé à des risques de grillage. Pour les raisons exposées ci-dessus, la quantité de 1,2-DHP est plus préférentiellement comprise entre 3% et 17,5% en poids par rapport à la quantité d'ASPS.

De préférence, dans les compositions de caoutchouc selon l'invention, la quantité totale d'ASPS et de 1,2-DHP représente moins de 10%, plus préférentiellement entre 5% et 10% en poids par rapport à la quantité de charge inorganique renforçante. Ceci correspond dans la majorité des cas à un taux (ASPS+1,2-DHP) compris entre 1 et 10 pce, compris plus préférentiellement entre 4 et 9 pce.

B) Dérivé guanidique (composant E)

Le second composant nécessaire à l'activation du couplage est un dérivé guanidique, c'est-à-dire une guanidine substituée. Les guanidines substituées sont bien connues de l'homme du métier, en particulier comme agents de vulcanisation, et ont été décrites dans de nombreux documents (voir par exemple "*Vulcanization and vulcanizing agents*" by W. Hofmann, Ed. MacLaren and Sons Ltd (London), 1967, pp. 180-182; EP-A-0 683 203 ou US-A-5 569 721).

Dans les compositions conformes à l'invention, on utilise de préférence la N,N'-diphénylguanidine (en abrégé "DPG") répondant à la formule particulière (III-1) ci-dessous:

(III-1)

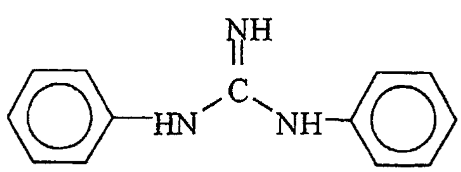

Mais on peut aussi utiliser des dérivés guanidiques autres que la DPG, en particulier d'autres dérivés guanidiques aromatiques répondant à la formule générale (III) ci-dessous:

(III)

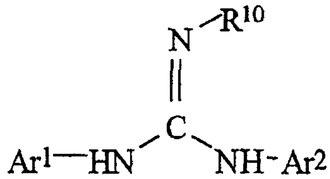

dans laquelle $Ar^1$ et $Ar^2$ représentent un groupement aryle, substitué ou non substitué, de préférence un groupement phényle, et $R^{10}$ représente un hydrogène ou un groupement hydrocarboné. A titre d'exemples de composés répondant à la formule générale (III) ci-dessus, on peut citer, outre la DPG déjà citée, la triphénylguanidine (TPG) ou encore la di-o-tolylguanidine (DOTG) de formule (III-2).

(III-2)

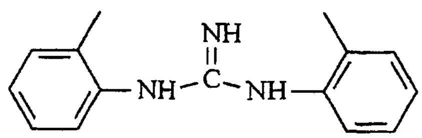

Dans les compositions conformes à l'invention, la quantité de dérivé guanidique représente de préférence entre 0,5% et 4% par rapport au poids de charge inorganique renforçante, plus préférentiellement entre 1% et 3%, soit de préférence entre 0,25 et 4 pce, plus préférentiellement entre 0,5 et 2 pce. En dessous des taux minima indiqués l'effet d'activation risque d'être insuffisant, alors qu'au-delà des maxima indiqués on n'observe généralement plus d'amélioration du couplage, tout en s'exposant à des risques de grillage.

De préférence, dans les compositions de l'invention, le système de couplage constitué par l'ASPS et l'activateur de couplage (1,2-DHP+dérivé guanidique) représente au total entre 2% et 20%, plus préférentiellement entre 5% et 15% en poids par rapport à la quantité de charge inorganique renforçante. Dans la plupart des cas, ce système de couplage s'est avéré suffisamment performant, pour les besoins des compositions destinées à la fabrication de pneumatiques, en particulier celles destinées aux bandes de roulement de pneumatiques pour véhicules tourisme, pour un taux inférieur à 12%, voire même inférieur à 10% en poids par rapport à la quantité de charge inorganique renforçante. Par rapport au poids d'élastomère diénique, le taux de système de couplage selon l'invention est de préférence compris entre 2 et 15 pce, plus préférentiellement entre 5 et 10 pce.

II-5. Additifs divers

Bien entendu, les compositions de caoutchouc conformes à l'invention comportent également tout ou partie des additifs habituellement utilisés dans les compositions de caoutchouc diénique réticulables au soufre et destinées à la fabrication de pneumatiques, comme par exemple des plastifiants, des pigments, des agents de protection du type antioxydants, antiozonants, un système de réticulation à base soit de soufre, soit de donneurs de soufre et/ou de peroxyde et/ou de bismaléimides, des accélérateurs de vulcanisation, des activateurs de vulcanisation, des huiles d'extension, etc... A la charge inorganique renforçante peut être également associée, si besoin est, une charge blanche conventionnelle non renforçante, comme par exemple des particules d'argile, de bentonite, talc, craie, kaolin, oxydes de titane.

Les compositions conformes à l'invention peuvent également contenir, en complément des ASPS, des agents de recouvrement (comportant par exemple la seule fonction Y) de la charge inorganique renforçante ou plus généralement des agents d'aide à la mise en oeuvre susceptibles de manière connue, grâce à une amélioration de la dispersion de la charge inorganique dans la matrice de caoutchouc et à un abaissement de la viscosité des compositions, d'améliorer leur faculté de mise en oeuvre à l'état cru, ces agents étant par exemple des alkylalkoxysilanes (notamment des alkyltriéthoxysilanes), des polyols, des polyéthers (par exemple des polyéthylèneglycols), des amines primaires,

secondaires ou tertiaires, des polyorganosiloxanes hydroxylés ou hydrolysables, par exemple des $\alpha,\omega$-dihydroxy-polyorganosiloxanes (notamment des $\alpha,\omega$-dihydroxy-polydiméthylsiloxanes). Ces compositions pourraient contenir, en plus, des agents de couplage autres que des ASPS.

II-6. Préparation des compositions de caoutchouc

Les compositions sont fabriquées dans des mélangeurs appropriés, de manière connue de l'homme du métier, typiquement en utilisant deux phases de préparation successives, une première phase de travail thermo-mécanique à haute température suivie d'une seconde phase de travail mécanique à plus basse température, telles que décrites par exemple dans les demandes EP-A-0 501 227, EP-A-0 810 258 ou WO99/28376 précitées.

La première phase de travail thermo-mécanique (parfois qualifiée de phase "non-productive") est destinée à mélanger de manière intime, par malaxage, les différents ingrédients de la composition, à l'exception du système de vulcanisation. Elle est conduite dans un dispositif de malaxage approprié tel qu'un mélangeur interne ou une boudineuse jusqu'à atteindre, sous l'effet du travail mécanique et du fort cisaillement imposé au mélange, une température maximale comprise entre 120°C et 190°C, de préférence comprise entre 130°C et 180°C.

Cette première phase peut comporter elle-même une seule ou plusieurs étapes de travail thermo-mécanique, séparées par exemple par une ou plusieurs étapes intermédiaires de refroidissement. Les différents ingrédients de la composition, élastomère(s), charge renforçante et son système de couplage, et les divers autres composants ("additifs") peuvent être incorporés dans le mélangeur en une ou plusieurs fois, soit au cours de la première étape thermo-mécanique, soit de manière échelonnée au cours des différentes étapes thermo-mécaniques, le cas échéant. La durée totale de ce travail thermo-mécanique (typiquement entre 1 et 20 min, par exemple entre 2 et 10 min) est choisie en fonction des conditions opératoires particulières, en particulier de la température maximale choisie, de la nature et du volume des constituants, l'important étant que soit obtenue dans la matrice élastomérique une bonne dispersion des différents ingrédients qui réagissent entre eux, permettant ainsi d'abord une bonne mise en oeuvre de la composition à l'état cru, ensuite un niveau suffisant de renforcement, après cuisson, par la charge renforçante et son système de couplage intermédiaire.

Après refroidissement du mélange ainsi obtenu, une seconde phase de travail mécanique est alors mise en oeuvre, à une température plus basse. Parfois qualifiée de phase "productive", cette phase de finition consiste à incorporer par mélangeage le système de vulcanisation (ou réticulation), dans un dispositif adapté, par exemple un outil à cylindres. Elle est conduite pendant une durée appropriée (typiquement entre 1 et 30 min, par exemple entre 2 et 5 min) et à une température suffisamment basse (typiquement inférieure à 120°C, par exemple entre 60°C et 100°C), dans tous les cas inférieure à la température de vulcanisation du mélange, de manière à se prémunir d'une vulcanisation prématurée (grillage).

Selon un mode de réalisation préférentiel du procédé selon l'invention, tous les constituants de base des compositions conformes à l'invention, à savoir (ii) la charge inorganique renforçante et le système de couplage selon l'invention constitué par l'association de (iii) l'ASPS, de (iv) la 1,2-DHP et du (v) dérivé guanidique, sont incorporés à (i) l'élastomère diénique au cours de la première phase dite non-productive, c'est-à-dire que l'on introduit dans le mélangeur et que l'on malaxe thermomécaniquement, en une ou plusieurs étapes, au moins ces différents constituants de base jusqu'à atteindre une température maximale comprise entre 120°C et 190°C, de préférence comprise entre 130°C et 180°C.

A titre d'exemple, la première phase (non-productive) est conduite en deux étapes successives d'une durée de 1 à 5 minutes, dans un mélangeur interne à palettes usuel du type "Banbury" dont la température de cuve initiale est de l'ordre de 60°C. On introduit d'abord l'élastomère (ou les élastomères) puis, après 1 minute par exemple de malaxage, la charge renforçante et son système de couplage associé ; on continue à malaxer puis, par exemple 1 minute plus tard, on ajoute les divers additifs, y compris les éventuels agents de recouvrement ou de mise en oeuvre complémentaires, à l'exception du système de vulcanisation (soufre et accélérateur primaire type sulfénamide). Lorsque la densité apparente de la charge renforçante (ou d'une des charges renforçantes si plusieurs sont utilisées) est relativement faible (cas par exemple des silices), il peut être préférable de fractionner en plusieurs fois l'introduction de cette dernière, et le cas échéant celle de son système de couplage, pour faciliter son incorporation à la matrice élastomérique, par exemple la moitié voire les 3/4 environ de la charge après la première minute de malaxage, le reste après deux minutes de malaxage. Le travail thermo-mécanique est conduit ainsi jusqu'à ce que soit atteinte une température maximale dite "de tombée" comprise par exemple entre 150°C et 170°C. On récupère le bloc de mélange ainsi obtenu et on le refroidit à une température inférieure à 100°C. Après refroidissement, une seconde étape thermo-mécanique est conduite dans le même ou un autre mélangeur dans le but de faire subir au mélange un traitement thermique complémentaire et d'obtenir notamment une meilleure dispersion de la charge renforçante ; bien entendu, certains des additifs tels que par exemple l'acide stéarique, la cire antiozone, l'agent antioxydant, l'oxyde de zinc ou autre additif, peuvent n'être introduits dans le mélangeur, en tout ou partie, qu'au cours de cette seconde étape de travail thermo-mécanique. Le résultat de cette première phase thermo-mécanique est alors repris sur un mélangeur

externe à cylindres, à basse température (par exemple entre 30°C et 60°C) et on ajoute le système de vulcanisation ; le tout est alors mélangé (phase productive) pendant quelques minutes, par exemple entre 2 et 5 minutes.

La composition finale ainsi obtenue est ensuite calandrée, par exemple sous la forme d'une feuille ou d'une plaque, notamment pour une caractérisation au laboratoire, ou encore extrudée, pour former par exemple un profilé de caoutchouc utilisé pour la fabrication de semi-finis tels que des bandes de roulement, des nappes sommet, des flancs, des nappes carcasse, des talons, des protecteurs, des chambres à air ou des gommes intérieures étanches pour pneu sans chambre.

La vulcanisation (ou cuisson) est conduite de manière connue à une température généralement comprise entre 130°C et 200°C, sous pression, pendant un temps suffisant qui peut varier par exemple entre 5 et 90 min en fonction notamment de la température de cuisson, du système de réticulation adopté et de la cinétique de vulcanisation de la composition considérée.

Il va de soi que l'invention concerne les compositions de caoutchouc précédemment décrites tant à l'état dit "cru" (i.e., avant cuisson) qu'à l'état dit "cuit" ou vulcanisé (i.e., après réticulation ou vulcanisation).

Bien entendu, les compositions conformes à l'invention peuvent être utilisées seules ou en coupage (i.e., en mélange) avec toute autre composition de caoutchouc utilisable pour la fabrication de pneumatiques.

## III. EXEMPLES DE REALISATION DE L'INVENTION

### III-1. Préparation des compositions de caoutchouc

On procède pour les essais qui suivent en deux étapes thermo-mécaniques séparées par une phase de refroidissement, de la manière suivante : on introduit dans un mélangeur interne de laboratoire (0,4 litre), du type "Banbury", rempli à 70 % et dont la température initiale de la cuve est d'environ 60°C, successivement le ou les élastomères, environ une minute plus tard les 2/3 de la charge inorganique renforçante et de son système de couplage associé, encore une minute plus tard le reste de la charge renforçante, de son système de couplage associé, ainsi que les divers additifs à l'exception de l'antioxydant, de l'oxyde zinc et du système de vulcanisation (soufre et sulfénamide) ; on conduit ainsi une première étape de travail thermomécanique pendant 3 à 4 minutes environ jusqu'à atteindre une température maximale de tombée de 165°C environ ; le bloc élastomérique est alors récupéré puis refroidi. Puis, une seconde étape est conduite dans le même mélangeur avec les mêmes conditions : le bloc élastomérique est alors soumis à un second travail thermo-mécanique d'une durée de 3 à 4 minutes également, avec ajout de l'oxyde de zinc et de l'antioxydant, jusqu'à atteindre une température maximale de tombée de 165°C environ.

On récupère le mélange ainsi obtenu, on le refroidit puis on ajoute soufre et sulfénamide sur un mélangeur externe (homo-finisseur) à 30°C, en mélangeant encore le tout (phase productive) pendant 3 à 4 minutes.

Les compositions ainsi obtenues sont ensuite calandrées soit sous la forme de plaques (épaisseur de 2 à 3 mm) ou feuilles fines de caoutchouc pour la mesure de leurs propriétés physiques ou mécaniques, soit sous la forme de profilés utilisables directement, après découpage et/ou assemblage aux dimensions souhaitées, par exemple comme produits semi-finis pour pneumatiques, en particulier comme bandes de roulement.

Dans la plupart des essais qui suivent, la charge blanche renforçante (silice et/ou alumine) constitue la totalité de la charge renforçante, utilisée à un taux préférentiel compris dans un domaine de 50 à 100 pce ; mais il va de soi que, dans ces essais, une fraction de cette dernière, de préférence minoritaire, pourrait être remplacée par du noir de carbone.

### III-2. Essais

#### A) Essai 1

Dans ce premier essai, on compare trois compositions de caoutchouc (mélange d'élastomères diéniques SBR et BR) renforcées de silice, destinées à la fabrication de bandes de roulement pour pneumatiques. L'élastomère SBR est préparé en solution et comprend 26,5% de styrène, 59,5% de motifs polybutadiène 1-2 et 23% de motifs polybutadiène 1-4 trans ; l'élastomère BR comporte 93% de motifs 1-4 cis.

Ces trois compositions sont identiques aux différences près qui suivent:

- composition N°1: TESPT (6,4 pce) avec DPG mais sans 1,2-DHP;
- composition N°2: TESPT (6,4 pce) auquel sont associés 0,25 pce (soit 3,9% en poids par rapport à la quantité de TESPT) de 1,2-DHP et 1,5 pce de DPG (soit environ 1,9% en poids par rapport à la quantité de charge inorganique renforçante);
- composition N°3: TESPT (6,4 pce) auquel sont associés 0,5 pce (soit 7,8% par rapport à la quantité de TESPT) de 1,2-DHP et 1,5 pce de DPG.

A titre de composant D est utilisé ici le condensat (aniline-butyraldéhyde) Vanax 808 HP commercialisé par la société R.T. Vanderbilt, constitué majoritairement de 3,5-diéthyl-1,2-dihydro-1-phényl-2-propylpyridine de formule (II-2) précitée (teneur annoncée en 1,2-DHP d'au moins 85% en poids).

La composition N°1 est le témoin de cet essai, elle contient un taux de TESPT de 8% en poids par rapport à la quantité de charge inorganique renforçante (6,4 pce de TESPT pour 80 pce de silice), mais est dépourvue de 1,2-DHP. Dans les compositions N°2 et N°3 conformes à l'invention, la quantité totale (ASPS+1,2-DHP) représente moins de 10% (respectivement 8,3% et 8,6 %) en poids par rapport à la quantité de charge inorganique renforçante ; quant au système de couplage conforme à l'invention (TESPT+1,2-DHP+DPG), il est avantageusement présent à un taux inférieur à 12% (respectivement, 10,2% et 10,5%) en poids par rapport à cette quantité de charge inorganique renforçante.

Les tableaux 1 et 2 donnent la formulation des différentes compositions (tableau 1 - taux des différents produits exprimés en pce), leurs propriétés avant et après cuisson (40 min à 150°C). La figure 1 reproduit quant à elle les courbes de module (en MPa) en fonction de l'allongement (en %) ; ces courbes sont notées C1, C2 et C3 et correspondent respectivement aux compositions N°1, N°2 et N°3.

L'examen des résultats du tableau 2 montre que les compositions selon l'invention (N°2 et N°3), comparée à la composition témoin N°1, présentent à l'état cru des viscosités Mooney peu différentes (et donc des propriétés de mise en oeuvre équivalentes), un temps de grillage certes plus court mais qui reste satisfaisant, et à l'état cuit des propriétés sensiblement améliorées :

- modules aux fortes déformations (M100 et M300) plus élevés, rapport M300/M100 également supérieur (de manière connue de l'homme du métier, indicateurs d'un plus fort renforcement);
- des pertes hystérétiques (PH) sensiblement plus faibles (indicatrices d'une plus basse résistance au roulement pour des bandes de roulement);
- des contraintes à la rupture équivalentes.

La figure 1 annexée confirme les résultats ci-dessus : pour des allongements de 100% et plus, toutes les valeurs de module sont nettement supérieures dans le cas des compositions N°2 et N°3 (courbes C2 et C3) ; pour un tel domaine d'allongements, un tel comportement illustre de manière claire une meilleure interaction entre la charge inorganique renforçante et l'élastomère.

En résumé, tous les résultats obtenus après cuisson sont représentatifs d'un meilleur couplage entre la charge inorganique renforçante et l'élastomère diénique, en d'autres termes d'une activation, par la 1,2-DHP et le dérivé guanidique combinés, de la fonction de couplage de l'ASPS.

B) Essai 2

Cet essai a pour but de montrer qu'il est possible, grâce à l'activation apportée par la 1,2-DHP et le dérivé guanidique, d'abaisser fortement la quantité d'ASPS (TESPT), sans pénaliser les propriétés de renforcement des compositions par la charge inorganique.

On compare trois compositions de caoutchouc similaires à celles de l'essai 1 précédent, ces compositions étant identiques aux différences près qui suivent:

- composition N°4: TESPT (6,4 pce) avec DPG, mais sans 1,2-DHP;
- composition N°5: TESPT (4 pce) avec DPG, mais sans 1,2-DHP;
- composition N°6: TESPT (4 pce) plus 0,5 pce de 1,2-DHP (soit 12,5% en poids par rapport à la quantité de TESPT) et 1,5 pce de DPG.

Seule la composition N°6 est donc conforme à l'invention ; la composition N°4 est la composition référence de l'art antérieur, la composition N°5 représente un témoin avec un taux identique de TESPT par rapport à la composition N°6. Les tableaux 3 et 4 donnent la formulation des différentes compositions, leurs propriétés avant et après cuisson (150°C, 40 min). La figure 2 reproduit les courbes de module (en MPa) en fonction de l'allongement (en %) ; ces courbes sont notées C4 à C6 et correspondent respectivement aux compositions N°4 à N°6.

Dans la composition N°4 selon l'art antérieur, le taux de TESPT représente 8% en poids par rapport à la quantité de silice, ce qui est supérieur de 60% au taux de TESPT utilisé dans la composition N°6 conforme à l'invention.

Dans cette composition N°6, la quantité d'ASPS tout comme la quantité totale (ASPS+1,2-DHP) représentent moins de 6% (respectivement, 5% et 5,6%) en poids par rapport à la quantité de charge inorganique renforçante. Quant au système de couplage lui-même (ASPS+1,2-DHP+DPG), il est présent à un taux avantageusement inférieur à 10% (précisément 7,5%) en poids par rapport à cette même quantité.

L'étude des différents résultats montre que la composition N°6 conforme à l'invention présente, comparée

d'une part à la composition de référence N°4, des performances après cuisson équivalentes malgré un taux de TESPT nettement plus bas, et comparée d'autre part à la composition témoin N°5 contenant la même quantité de TESPT mais dépourvue de 1,2-DHP, des performances globalement supérieures :

- modules aux fortes déformations (M100, M300) et rapport M300/M100 quasiment identiques à ceux de la composition référence N°4, nettement supérieurs à ceux de la composition témoin N°5;
- pertes hystérétiques (PH) identiques pour les compositions N°4 et N°6, par ailleurs nettement inférieures à celles de la composition N°5;
- des propriétés à la rupture équivalentes.

La figure 2 annexée confirme bien l'effet d'activation du couplage apportée par la 1,2-DHP et la DPG : on voit nettement que les valeurs de module, pour des allongements de 100% et plus, sont sensiblement identiques pour les compositions N°4 et N°6 (courbes C4 et C6 très proches), nettement supérieures à celles observées sur la composition témoin N°5.

On peut donc ainsi abaisser de manière très sensible (de 6,4 pce à 4 pce) la quantité de TESPT dans les compositions de caoutchouc conformes à l'invention, tout en maintenant les propriétés de renforcement à un niveau sensiblement identique.

Certes, la diminution du taux de silane entraîne, de manière attendue, une augmentation de la viscosité à l'état cru, mais les variations observées restent acceptables ; en particulier, l'homme du métier saura corriger, si besoin est, l'augmentation de viscosité à l'état cru par l'addition d'une faible quantité d'agent de recouvrement (voir essai 10 ci-après).

C) Essai 3

Cet essai démontre qu'il est possible, grâce à l'activation apportée par une 1,2-DHP et un dérivé guanidique, de remplacer un alkoxysilane tétrasulfuré (TESPT) par un alkoxysilane disulfuré (TESPD), connu comme moins actif que le précédent, sans pratiquement affecter les propriétés des compositions de caoutchouc.

On compare trois compositions de caoutchouc similaires à celles des essais 1 et 2 précédents, ces trois compositions étant identiques aux différences près qui suivent:

- composition N°7: TESPT (6,4 pce) (avec dérivé guanidique, mais sans 1,2-DHP);
- composition N°8: TESPD (5,6 pce) (avec dérivé guanidique, mais sans 1,2-DHP);
- composition N°9: TESPD (5,6 pce) plus 0,5 pce de 1,2-DHP (soit 8,9% en poids par rapport à la quantité de TESPD) et 1,5 pce de dérivé guanidique.

La composition N°7 est le témoin de cet essai (8% de TESPT par rapport au poids de charge inorganique renforçante) ; la composition N°8, également non conforme à l'invention, contient le TESPD à un taux isomolaire par rapport au taux de TESPT, c'est-à-dire que pour les deux compositions N°7 et N°8 on utilise le même taux de fonctions triéthoxysilanes réactives vis-à-vis de la silice et de ses groupes hydroxyles de surface. La composition N°9 est la seule composition conforme à l'invention ; son taux d'ASPS représente moins de 8% (précisément 7%) en poids par rapport à la quantité de silice (80 pce), la quantité (TESPD+1,2-DHP) représentant moins de 8% (précisément 7,6%) par rapport à cette même quantité ; quant au système de couplage selon l'invention (TESPD+1,2-DHP+DPG), son taux représente avantageusement moins de 10% (précisément 9,5%) en poids par rapport à la quantité de charge inorganique renforçante.

Les tableaux 5 et 6 donnent la formulation des différentes compositions, leurs propriétés avant et après cuisson (150°C, 40 min) ; la figure 3 reproduit les courbes de module (en MPa) en fonction de l'allongement (en %), ces courbes étant notées C7 à C9 et correspondant respectivement aux compositions N°7 à N°9.

On constate que la composition N°8, comparée à la composition N°7, présente des propriétés de renforcement après cuisson (M100, M300 et rapport M300/M100) qui sont nettement inférieures, une résistance à la rupture moindre, ainsi que des pertes hystérétiques plus importantes : tout ceci est dû à la moindre efficacité de couplage (charge inorganique/élastomère) de l'alkoxysilane disulfuré (TESPD) par rapport à l'alkoxysilane tétrasulfuré (TESPT).

Toutefois, grâce à l'ajout d'une faible quantité de 1,2-DHP dans la composition N°9, on observe une remontée très sensible des propriétés de renforcement (M100, M300, M300/M100, contrainte à la rupture) et un abaissement des PH, ces propriétés étant ramenées à des niveaux proches de ceux observés sur la composition N°7. Cette efficacité de la 1,2-DHP combinée au dérivé guanidique, comme activateur de couplage du TESPD, est aussi clairement illustrée par les courbes de la figure 3 : courbes C7 et C9 voisines et situées, pour des allongements supérieurs à 100%, bien au-delà de la courbe C8.

D) Essai 4

Cet essai confirme les résultats précédents, notamment ceux de l'essai 1, en utilisant une 1,2-DHP d'origine différente, disponible sous la forme d'un condensat heptaldéhyde-aniline dont le constituant majoritaire est une 1,2-DHP (produit commercialisé par Uniroyal Chemical sous la dénomination "Hepteen Base").

Ces deux compositions sont identiques aux différences près qui suivent:

- composition N°10: TESPT (6,4 pce), avec DPG (1,5 pce) mais sans 1,2-DHP;
- composition N°11: TESPT (6,4 pce) avec DPG (1,5 pce) plus 0,5 pce de 1,2-DHP (soit 7,8% en poids par rapport à la quantité de TESPT).

Chaque composition comporte 1,5 pce de dérivé guanidique soit environ 1,9% en poids par rapport à la quantité de charge inorganique renforçante. La composition N°10 est le témoin de cet essai, elle contient un taux de TESPT de 8% en poids par rapport à la quantité de charge inorganique renforçante (6,4 pce de TESPT pour 80 pce de silice), mais est dépourvue de 1,2-DHP. Dans la composition N°11, conforme à l'invention, la quantité d'alkoxysilane et de 1,2-DHP représente moins de 10% (précisément 8,6 %) en poids par rapport à la quantité de charge inorganique renforçante ; quant au système de couplage conforme à l'invention (TESPT+1,2-DHP+DPG), il est avantageusement présent à un taux inférieur à 12% (précisément 10,5%) en poids par rapport à la quantité de charge inorganique renforçante.

Les tableaux 7 et 8 donnent la formulation des différentes compositions (tableau 7 - taux des différents produits exprimés en pce), leurs propriétés avant et après cuisson (40 min à 150°C). La figure 4 reproduit quant à elle les courbes de module (en MPa) en fonction de l'allongement (en %) ; ces courbes sont notées C 10 et C11 et correspondent respectivement aux compositions N° 10 et N°11.

L'examen des résultats du tableau 8 montre que la composition selon l'invention (N°11), comparée à la composition témoin (N°10), présente à l'état cru une viscosité Mooney peu différente (donc des propriétés de mise en oeuvre équivalentes), un temps de grillage certes plus faible mais satisfaisant, et à l'état cuit des propriétés sensiblement améliorées :

- modules aux fortes déformations (M100 et M300) plus élevés, rapport M300/M100 également supérieur (indicateurs d'un plus fort renforcement);
- des pertes hystérétiques (PH) plus faibles;
- une contrainte à la rupture équivalente.

La figure 4 annexée confirme les résultats ci-dessus : pour des allongements de 100% et plus, toutes les valeurs de module sont supérieures dans le cas de la composition conforme à l'invention (comparer courbes C11 et C10) ; pour un tel domaine d'allongements, un tel comportement illustre de manière claire une meilleure interaction entre la charge inorganique renforçante et l'élastomère, grâce au système de couplage selon l'invention.

E) Essai 5

On prépare trois compositions de caoutchouc comportant à titre de charge inorganique renforçante un mélange (50/50) de silice et d'alumine ; l'alumine est une alumine renforçante telle que décrite dans la demande EP-A-0 810 258 précitée.

Ces compositions sont identiques aux différences près qui suivent:

- composition N°12: TESPT avec DPG mais sans 1,2-DHP;
- composition N°13: TESPT activé par 1,2-DHP et DPG;
- composition N°14: TESPT activé par 1,2-DHP et DPG.

La composition N°12 est le témoin de l'essai, elle contient un taux d'ASPS inférieur à 8% (précisément 6,6%) par rapport au poids de charge inorganique (6,5 pce de TESPT par rapport à 99 pce de charge). Les compositions N°13 et N°14, conformes à l'invention, comportent le système de couplage conforme à l'invention (ASPS+1,2-DHP+DPG) à un taux qui est lui aussi, avantageusement, inférieur à 8% (précisément 7,9%) par rapport au poids de charge inorganique renforçante totale.

Les tableaux 9 et 10 donnent la formulation des différentes compositions et leurs propriétés avant et après cuisson (40 min à 150°C). La figure 5 reproduit les courbes de module en fonction de l'allongement (courbes notées C12 à C14 et correspondant respectivement aux compositions N°12 à N°14).

L'examen des résultats montre, pour les compositions de l'invention, certes des viscosités Mooney supérieures (pouvant être réduites par l'addition d'un agent de recouvrement), mais à l'état cuit des propriétés améliorées: modules M100 et M300, rapport M300/M100 plus élevés, pertes PH plus faibles. La figure 5 confirme ces résultats avec, pour des allongements de 100% et plus, des modules supérieurs pour les compositions de l'invention (courbes C 13 et C14 au-dessus de la courbe C12).

On note par ailleurs que les meilleurs résultats (M100, M300, rapport M300/M100, PH) sont obtenus avec le condensat butyraldéhyde-aniline présentant la teneur la plus élevée en 1,2-DHP (Vanax 808 HP), comme confirmé par les courbes de la figure 5 (courbe C13 au-dessus de la courbe C14).

F) Essai 6

Dans cet essai, les résultats de l'essai précédent sont confirmés en présence d'une autre alumine renforçante (selon demande EP-A-0 810 258 précitée), de surface BET différente (taux d'ASPS : 6% en poids par rapport à la quantité de charge inorganique renforçante).

Les deux compositions testées sont identiques aux différences près qui suivent:

- composition N°15: TESPT avec DPG mais sans 1,2-DHP;
- composition N°16: TESPT activé par 1,2-DHP et DPG. N° 16 selon l'invention, la La composition N°15 est le témoin de l'essai. Dans la composition N°16 selon l'invention, la quantité totale du système de couplage (TESPT+1,2-DHP+DPG) est avantageusement inférieure à 8% (précisément 7,5%) en poids par rapport à la quantité de charge inorganique.

Les tableaux 11 et 12 donnent la formulation des compositions et leurs propriétés avant et après cuisson (40 min à 150°C). La figure 6 reproduit les courbes de module en fonction de l'allongement (notées C15 et C16).

Les résultats démontrent que la composition de l'invention, comparée au témoin, présente à l'état cru une viscosité quasiment identique, un temps de grillage réduit mais satisfaisant, et à l'état cuit des propriétés indicatrices d'un meilleur couplage: modules M100, M300, rapport M300/M100 supérieurs, pertes PH nettement réduites. La figure 6 confirme ces résultats, avec une courbe C16 située nettement au-dessus de la courbe témoin C15.

G) Essai 7

Cet essai démontre que la présence d'un dérivé guanidique (DPG ou DOTG) est une caractéristique essentielle dans le système de couplage selon l'invention.

Les quatre compositions testées sont identiques aux différences près qui suivent:

- composition N°17: TESPT avec DPG mais sans 1,2-DHP;
- composition N°18: TESPT avec 1,2-DHP mais sans dérivé guanidique;
- composition N°19: TESPT avec DPG et 1,2-DHP;
- composition N°20: TESPT avec DOTG et 1,2-DHP.

Seules les compositions N°19 et N°20 sont donc conformes à l'invention ; la composition N°17 est le témoin selon l'art antérieur. Les tableaux 13 et 14 donnent la formulation et les propriétés de ces compositions avant et après cuisson (40 min à 150°C). La figure 7 reproduit les courbes de module en fonction de l'allongement (notées C17 à C20 et correspondant respectivement aux compositions N°17 à N°20).

L'étude des différents résultats montre que les compositions de l'invention, comparées à la composition témoin N°17, présentent à l'état cuit des propriétés nettement améliorées: modules M100, M300 et rapport M300/M100 nettement supérieurs, valeurs PH très sensiblement réduites, autant d'indicateurs clairs d'un couplage amélioré, comme cela est confirmé par la figure 7: courbes C19 et C20 situées nettement au-dessus de la courbe témoin C17.

Quant à la composition N°18, dépourvue de dérivé guanidique, ces propriétés apparaissent globalement dégradées par rapport à celles des compositions de l'invention, tant à l'état cru qu'après cuisson (viscosité nettement plus élevée ; pertes PH plus importantes ; rapport M300/M100 inférieur ; courbe C18 légèrement en dessous de la courbe C17).

Ces résultats démontrent donc clairement, qu'en l'absence de dérivé guanidique, la 1,2-DHP est sans effet sur l'agent de couplage.

H) Essai 8

Cet essai démontre qu'il est possible, grâce à l'activation forte apportée par la 1,2-DHP et le dérivé guanidique combinés, d'abaisser de manière très importante la quantité d'ASPS (ici, alkoxysilane disulfuré TESPD) tout en maintenant les propriétés de renforcement à un niveau sensiblement identique.

Les trois compositions testées sont identiques aux différences près qui suivent:

- composition N°21: TESPD (5,6 pce) avec DPG mais sans 1,2-DHP;
- composition N°22: TESPD (3,5 pce) avec DPG mais sans 1,2-DHP;
- composition N°23: TESPD (3,5 pce) avec DPG (1,5 pce) et 1,2-DHP (0,5 pce soit 14,3% en poids par rapport à la quantité de TESPD).

La composition N°21 est la référence de l'art antérieur ; on note que son taux d'ASPS est très nettement (60%) supérieur au taux d'ASPS de la composition selon l'invention N°23. Dans cette composition de l'invention N°23, la quantité totale (TESPD+1,2-DHP) représente moins de 6% (précisément 5%) en poids par rapport à la quantité de silice. Quant au système de couplage lui-même (ASPS+1,2-DHP+DPG), il est avantageusement présent à un taux inférieur à 8% (précisément 6,9%) en poids par rapport à cette même quantité.

Les tableaux 15 et 16 donnent la formulation des différentes compositions, leurs propriétés avant et après cuisson (150°C, 40 min). La figure 8 reproduit les courbes de module/allongement (courbes notées C21 à C23 et correspondant respectivement aux compositions N°21 à N°23).

Les résultats montrent que la composition N°23 selon l'invention présente, comparée à la composition de référence N°21, des performances après cuisson équivalentes malgré un taux de TESPD nettement plus bas: modules M100, M300, rapport M300/M100, propriétés à la rupture ainsi que pertes PH sensiblement identiques. Quant à la composition témoin N°22 contenant le même taux de TESPD que la composition de l'invention, elle montre des performances nettement dégradées en l'absence de 1,2-DHP.

La figure 8 confirme bien ces résultats, la composition de l'invention (courbe C23) présentant des valeurs de module légèrement supérieures à celles de la composition de référence N°21 (courbe C21), très au-delà de celles de la composition témoin N°22 dépourvue de 1,2-DHP.

<u>I) Essai 9</u>

Dans cet essai, l'invention est mise en oeuvre avec un ASPS autre que les ASPS symétriques utilisés dans les essais précédents, en l'occurrence un ASPS du type polymérique.

On prépare pour cela deux compositions identiques aux différences près qui suivent:

- composition N°24: ASPS avec DPG mais sans 1,2-DHP;
- composition N°25: ASPS activé par 1,2-DHP et DPG.

La composition N°24 est le témoin de cet essai ; la composition N°25, conforme à l'invention, comporte le système de couplage selon l'invention (ASPS+1,2-DHP+dérivé guanidique) à un taux préférentiel inférieur à 12% (précisément 10,5%) par rapport au poids de charge inorganique.

L' ASPS testé répond à la formule connue précitée (selon WO96/10604):

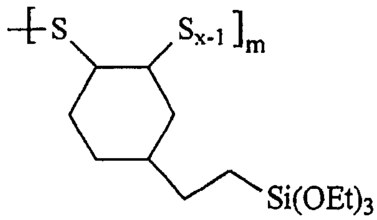

Les tableaux 17 et 18 donnent la formulation des deux compositions, leurs propriétés avant et après cuisson (40 min à 150°C). La figure 9 reproduit les courbes module/allongement (notées C24 et C25).

Les résultats démontrent que la composition selon l'invention, comparée à la composition témoin, présente des propriétés avant cuisson sensiblement identiques et des propriétés améliorées après cuisson: modules aux fortes déformations M100 et M300, rapport M300/M100 plus élevés (indicateurs d'un renforcement supérieur), pertes PH plus faibles (donc meilleures). La figure 9 confirme ces résultats, avec, pour des allongements de 100% et plus, des valeurs de module nettement supérieures pour la composition de l'invention (courbe C24). Tout ceci illustre clairement une meilleure interaction entre la charge inorganique et l'élastomère.

J) Essai 10

De manière connue, une réduction sensible du taux d'ASPS risque d'entraîner une augmentation de viscosité à l'état cru des compositions de caoutchouc, augmentation qui peut pénaliser leur mise en oeuvre industrielle. Cet essai démontre qu'il est possible de pallier un tel inconvénient par l'addition, dans les compositions de l'invention, d'un agent de recouvrement de la charge inorganique.

Dans un tel cas, selon un mode de réalisation particulièrement préférentiel de l'invention, on associe alors à l'ASPS, à titre d'agent de recouvrement, un polyorganosiloxane hydroxylé, notamment un $\alpha,\omega$-dihydroxy-polyorganosiloxane, conformément à l'enseignement de la demande de brevet EP-A-0 784 072.

On prépare pour cet essai six compositions, identiques aux différences près qui suivent:

- composition N°26: TESPT (6,4 pce) avec DPG mais sans 1,2-DHP;
- composition N°27: TESPT (4 pce), avec DPG mais sans 1,2-DHP;
- composition N°28: TESPT (4 pce) activé par DPG et 1,2-DHP ;
- compositions N°29 à N°31: identiques à la composition N°28 mais comportant en outre des taux variables (0,5 à 2,4 pce) de différents agents de recouvrement (alkyltrialkoxysilanes ou $\alpha,\omega$-dihydroxy-polyorganosiloxane).

La composition N°26 est la référence de l'art antérieur, la composition N°27 représente un témoin avec un taux identique de TESPT par rapport aux compositions conformes à l'invention N°28 à N°31.

Les tableaux 19 et 20 donnent la formulation des différentes compositions, leurs propriétés avant et après cuisson (150°C, 40 min). Les agents de recouvrement ont été incorporés aux compositions selon l'invention en même temps que l'ASPS (étape non-productive). Dans ces compositions selon l'invention (N°28 à N°31), la quantité totale de système de couplage (TESPT+1,2-DHP+DPG) représente avantageusement moins de 8% (précisément 7,5%) par rapport au poids de charge inorganique.

Les résultats du tableau 20 appellent les commentaires qui suivent:

- on note tout d'abord que la diminution du taux d'ASPS dans la composition témoin N°27 entraîne, par rapport à la composition de référence N°26, une dégradation générale des propriétés, tant à l'état cru (augmentation sensible de viscosité, de 76 à 96 UM) qu'après cuisson: modules M100 et M300 fortement diminués, pertes PH plus importantes;
- grâce à l'ajout de 1,2-DHP dans la composition N°28 et donc à l'action combinée de la DPG et de la 1,2-DHP, on observe une remontée très nette des propriétés après cuisson qui recouvrent des valeurs (notamment M100, M300, PH) quasiment identiques à celles de la référence de départ (composition N° 26) ; toutefois, l'augmentation de viscosité à l'état cru (76 à 96 UM) précédemment observée n'est compensée que très faiblement (de 96 à 91 UM) par l'ajout de 1,2-DHP;
- cette augmentation de viscosité à l'état cru est par contre totalement corrigée, tout en maintenant les propriétés après cuisson à un niveau sensiblement identique à celui de la composition de référence (N°26), grâce à l'addition, dans les compositions selon l'invention N°29 à N°31, de l'agent de recouvrement (retour à des valeurs de 70 à 80 UM environ).

On notera en particulier l'excellent compromis de propriétés obtenu avec la composition conforme à l'invention N°31, malgré une proportion très faible (inférieure à 1 pce) d'huile $\alpha,\omega$-dihydroxy-polyorganosiloxane à titre d'agent de recouvrement.

K) Essai 11

L'invention est illustrée ici par des essais de roulage de pneumatiques à carcasse radiale de dimension 175/70 R14, fabriqués de manière connue et qui sont en tout point identiques hormis la constitution de la composition de caoutchouc constitutive de la bande de roulement. Les compositions testées sont identiques aux compositions N°26, N°28 et N°31 de l'essai 10 précédent, à la différence près qu'elles contiennent en outre une faible proportion (6 pce) de noir de carbone (N234), utilisé essentiellement comme agent colorant et anti-UV, et qu'elles ont été préparées, pour les besoins de ces essais en pneumatique, dans des mélangeurs appropriés de plus grande capacité.

On soumet les pneumatiques ainsi préparés à un roulage sur route, sur un véhicule de marque Citroën Xsara, jusqu'à ce que l'usure due au roulage atteigne les témoins d'usure disposés dans les rainures des bandes de roulement. De manière connue de l'homme du métier, la résistance à l'usure de la composition de caoutchouc, au cours du roulage du pneumatique, est directement corrélée à la qualité du renforcement apporté par la charge renforçante, c'est-à-dire au taux de couplage (charge/élastomère) obtenu. En d'autres termes, la mesure de la résistance à l'usure est un excellent indicateur, sinon le meilleur puisque évalué sur le produit manufacturé final, de la performance du système

de couplage utilisé.

On constate après roulage que les pneumatiques équipés des bandes de roulement conformes à l'invention (correspondant aux compositions N°28 et N°31) montrent une performance quasiment identique à celle du pneumatique témoin (correspondant à la composition N°26), parcourant sensiblement le même kilométrage, malgré un taux d'agent de couplage fortement réduit (4,0 pce au lieu de 6,4 pce). Cette résistance à l'usure équivalente n'a pu être obtenue que grâce à l'activation forte du couplage apportée par les composés 1,2-DHP et dérivé guanidique en combinaison. La composition N°31, incorporant l'agent de recouvrement polyorganosiloxane, a en outre offert l'avantage d'une mise en oeuvre industrielle facilitée (plasticité réduite à l'état cru) par rapport à la composition N°28.

L'invention permet donc de disposer de bandes de roulement de pneumatiques présentant une très bonne résistance à l'usure combinée à une basse résistance au roulement, même en présence d'un taux d'ASPS (en particulier TESPT) très sensiblement réduit.

En conclusion, tous les résultats précédents illustrent un couplage amélioré entre la charge inorganique renforçante et l'élastomère diénique lorsqu'on utilise, associés à l'ASPS, à la fois la 1,2-DHP et le dérivé guanidique. En d'autres termes, ces résultats sont représentatifs d'une activation, par la 1,2-DHP et le dérivé guanidique combinés, de la fonction de couplage remplie par l'ASPS.

Grâce à cette activation, on peut désormais envisager de réduire la quantité d'ASPS, notamment de TESPT, tout en maintenant les propriétés de couplage et donc celles d'usure à des niveaux équivalents ; le coût global des compositions de caoutchouc peut ainsi être abaissé, ainsi que celui des pneumatiques qui les comportent.

Une réduction du taux d'ASPS présente par ailleurs l'avantage, du point de vue de l'environnement (dégagement VOC - "*Volatile Organic Compounds*"), de conduire à une diminution des taux d'alcool (éthanol en présence de TESPT) émis au cours de la fabrication des compositions de caoutchouc, ou lors de la cuisson des articles en caoutchouc incorporant ces compositions.

L'invention permet aussi, si l'on conserve un taux élevé d'ASPS, d'obtenir un niveau de couplage supérieur, et donc d'atteindre un renforcement encore meilleur des compositions de caoutchouc par la charge inorganique renforçante.

Le nouveau système de couplage (charge inorganique/élastomère diénique) conforme à l'invention offre ainsi aux compositions de l'invention un compromis de propriétés avantageux par rapport aux compositions de l'art antérieur renforcées d'une charge inorganique.

Tableau 1

| Composition N° : | 1 | 2 | 3 |
|---|---|---|---|
| SBR (1) | 88.5 | 88.5 | 88.5 |
| BR (2) | 25 | 25 | 25 |
| silice (3) | 80 | 80 | 80 |
| huile aromatique | 21.5 | 21.5 | 21.5 |
| TESPT (Si69) | 6.4 | 6.4 | 6.4 |
| 1,2-DHP (4) | - | 0.25 | 0.5 |
| ZnO | 2.5 | 2.5 | 2.5 |
| acide stéarique | 2 | 2 | 2 |
| antioxydant (5) | 1.9 | 1.9 | 1.9 |
| DPG (6) | 1.5 | 1.5 | 1.5 |
| soufre | 1.1 | 1.1 | 1.1 |
| CBS (7) | 2 | 2 | 2 |

(1) SBR solution avec 59,5 % de motifs polybutadiène 1-2 ; 26,5% de styrène ; Tg = -29 °C ; 75 pce SBR sec étendu avec 13,5 pce d'huile aromatique (soit un total de 88,5 pce);

(2) BR avec 4,3 % de 1-2 ; 2,7% de trans ; 93% de cis 1-4 (Tg = - 106°C);

(3) silice type "HDS" - Zeosil 1165MP de la société Rhodia sous forme de microperles (BET et CTAB : environ 160 $m^2/g$);

(4) 1,2-DHP de formule II-2 (Vanax 808 HP de la société R.T Vanderbilt);

(5) N-1,3-diméthylbutyl-N-phényl-para-phénylènediamine (Santoflex 6-PPD de la société Flexsys);

(6) diphénylguanidine (Vulkacit D de la société Bayer);

(7) N-cyclohexyl-2-benzothiazyl-sulfénamide (Santocure CBS de la société Flexsys).

Tableau 2

| Composition N° : | 1 | 2 | 3 |
|---|---|---|---|
| *Propriétés avant cuisson:* | | | |
| Mooney (UM) | 90 | 94 | 97 |
| T5 (min) | 20 | 14 | 12 |
| *Propriétés après cuisson:* | | | |
| M10 (MPa) | 4.95 | 5.12 | 4.94 |
| M100 (MPa) | 1.67 | 1.80 | 1.92 |
| M300 (MPa) | 2.14 | 2.46 | 2.79 |
| M300/M100 | 1.28 | 1.37 | 1.45 |
| PH (%) | 28 | 25 | 23 |
| contrainte rupture (MPa) | 22.3 | 21.7 | 22.3 |
| allongement rupture (%) | 573 | 492 | 463 |

Tableau 3

| Composition N° : | 4 | 5 | 6 |
|---|---|---|---|
| SBR (1) | 88.5 | 88.5 | 88.5 |
| BR (2) | 25 | 25 | 25 |
| silice (3) | 80 | 80 | 80 |
| huile aromatique | 21.5 | 21.5 | 21.5 |
| TESPT (Si69) | 6.4 | 4 | 4 |
| 1,2-DHP (4) | - | - | 0. 5 |
| ZnO | 2.5 | 2.5 | 2.5 |
| acide stéarique | 2 2 2 | | |
| antioxydant (5) | 1.9 | 1.9 | 1.9 |
| DPG (6) | 1.5 | 1.5 | 1.5 |
| soufre | 1.1 | 1.1 | 1.1 |
| CBS (7) | 2 | 2 | 2 |
| (1) à (7) idem tableau 1. | | | |

Tableau 4

| Composition N° : | 4 | 5 | 6 |
|---|---|---|---|
| *Propriétés avant cuisson:* | | | |
| Mooney (UM) | 83 | 105 | 108 |
| T5 (min) | 21 | 21 | 17 |
| *Propriétés après cuisson:* | | | |
| M10 (MPa) | 5.34 | 5.62 | 5.37 |
| M100 (MPa) | 1.73 | 1.46 | 1.60 |
| M300 (MPa) | 2.2 | 1.59 | 2.06 |

Tableau 4 (suite)

| Composition N° : | 4 | 5 | 6 |
|---|---|---|---|
| *Propriétés après cuisson:* | | | |
| M300/M100 | 1.27 | 1.09 | 1.29 |
| PH (%) | 28 | 33.5 | 28 |
| contrainte rupture (MPa) | 22.5 | 22.3 | 23.9 |
| allongement rupture (%) | 526 | 661 | 573 |

Tableau 5

| Composition N° : | 7 | 8 | 9 |
|---|---|---|---|
| SBR (1) | 88.5 | 88.5 | 88.5 |
| BR (2) | 25 | 25 | 25 |
| silice (3) | 80 | 80 | 80 |
| huile aromatique | 21.5 | 21.5 | 21.5 |
| TESPT (Si69) | 6.4 | - | - |
| TESPD (Si266) | - | 5.6 | 5.6 |
| 1,2-DHP (4) | - | - | 0.5 |
| ZnO | 2.5 | 2.5 | 2.5 |
| acide stéarique | 2 | 2 | 2 |
| antioxydant (5) | 1.9 | 1.9 | 1.9 |
| DPG (6) | 1.5 | 1.5 | 1.5 |
| soufre | 1.1 | 1.1 | 1.1 |
| CBS (7) | 2 | 2 | 2 |
| (1) à (7) idem tableau 1. | | | |

Tableau 6

| Composition N° : | 7 | 8 | 9 |
|---|---|---|---|
| *Propriétés avant cuisson:* | | | |
| Mooney (UM) | 90 | 88 | 97 |
| T5 (min) | 19 | 26 | 14 |
| *Propriétés après cuisson:* | | | |
| M10 (MPa) | 5.51 | 5.43 | 5.58 |
| M100 (MPa) | 1.71 | 1.35 | 1.55 |
| M300 (MPa) | 2.11 | 1.42 | 1.81 |
| M300/M100 | 1.23 | 1.05 | 1.17 |
| PH (%) | 29 | 34 | 31 |
| contrainte rupture (MPa) | 22.6 | 21.4 | 22.4 |
| allongement rupture (%) | 599 | 733 | 636 |

Tableau 7

| Composition N° : | 10 | 11 |
|---|---|---|
| SBR (1) | 88.5 | 88.5 |
| BR (2) | 25 | 25 |
| silice (3) | 80 | 80 |
| huile aromatique | 21.5 | 21.5 |
| TESPT (Si69) | 6.4 | 6.4 |
| 1,2-DHP (8) | - | 0.5 |
| ZnO | 2.5 | 2.5 |
| acide stéarique | 2 | 2 |
| antioxydant (5) | 1.9 | 1.9 |
| DPG (6) | 1.5 | 1.5 |
| soufre | 1.1 | 1.1 |
| CBS (7) | 2 | 2 |

(1) à (7) idem tableau 1 ;
(8) condensat "Hepteen base" (société Uniroyal Chemical).

Tableau 8

| Composition N° : | 10 | 11 |
|---|---|---|
| *Propriétés avant cuisson:* | | |
| Mooney (UM) | 83 | 86 |
| T5 (min) | 21 | 15 |
| *Propriétés après cuisson:* | | |
| M10 (MPa) | 5.34 | 5.36 |
| M100 (MPa) | 1.73 | 1.86 |
| M300 (MPa) | 2.20 | 2.50 |
| M300/M100 | 1.27 | 1.34 |
| PH (%) | 28 | 25 |
| contrainte rupture (MPa) | 22.5 | 22.6 |
| allongement rupture (%) | 526 | 492 |

Tableau 9

| Composition N° : | 12 | 13 | 14 |
|---|---|---|---|
| SBR (1) | 88.5 | 88.5 | 88.5 |
| BR (2) | 25 | 25 | 25 |
| silice (3) | 49.5 | 49.5 | 49.5 |
| alumine (3bis) | 49.5 | 49.5 | 49.5 |
| huile aromatique | 21.5 | 21.5 | 21.5 |
| TESPT (Si69) | 6.5 | 6.5 | 6.5 |
| 1,2-DHP (4) | - | 0.5 | - |

(1) à (7) idem tableau 1;
(3bis) alumine "CR125" de la société Baïkowski; (sous forme de poudre - BET : environ 105 $m^2/g$).

Tableau 9 (suite)

| Composition N° : | 12 | 13 | 14 |
|---|---|---|---|
| 1.2-DHP (9) | - | - | 0.5 |
| ZnO | 2.5 | 2.5 | 2.5 |
| acide stéarique | 2 | 2 | 2 |
| antioxydant (5) | 1.9 | 1.9 | 1.9 |
| DPG (6) | 0.9 | 0.9 | 0.9 |
| soufre | 1.1 | 1.1 | 1.1 |
| CBS (7) | 2 | 2 | 2 |

(9) 1,2-DHP de formule II-2 (Vulkacit 576 de la société Bayer).

Tableau 10

| Composition N° : | 12 | 13 | 14 |
|---|---|---|---|
| *Propriétés avant cuisson:* | | | |
| Mooney (UM) | 86 | 109 | 104 |
| T5 (min) | 14 | 10 | 10 |
| *Propriétés après cuisson:* | | | |
| M10 (MPa) | 5.06 | 5.28 | 5.38 |
| M100 (MPa) | 1.65 | 1.86 | 1.84 |
| M300 (MPa) | 1.87 | 2.33 | 2.18 |
| M300/M100 | 1.13 | 1.25 | 1.18 |
| PH (%) | 32.7 | 30.4 | 32.2 |
| contrainte rupture (MPa) | 22.0 | 22.3 | 22.3 |
| allongement rupture (%) | 613 | 531 | 559 |

Tableau 11

| Composition N° : | 15 | 16 |
|---|---|---|
| SBR (1) | 88.5 | 88.5 |
| BR (2) | 25 | 25 |
| silice (3) | 47.5 | 47.5 |
| alumine (3bis) | 47.5 | 47.5 |
| huile aromatique | 21.5 | 21.5 |
| TESPT (Si69) | 5.7 | 5.7 |
| 1,2-DHP (4) | - | 0.5 |
| ZnO | 2.5 | 2.5 |
| acide stéarique | 2 | 2 |
| antioxydant (5) | 1.9 | 1.9 |
| DPG (6) | 0.9 | 0.9 |
| soufre | 1.1 | 1.1 |
| CBS (7) | 2 | 2 |

(1) à (7) idem tableau 1;
(3bis) alumine "APA-100RDX" de la société Condea (sous forme de poudre - BET : environ 85 $m^2/g$).

Tableau 12

| Composition N° : | 15 | 16 |
|---|---|---|
| *Propriétés avant cuisson:* | | |
| Mooney (UM) | 71 | 75 |
| T5 (min) | 18 | 12 |
| *Propriétés après cuisson:* | | |
| M10 (MPa) | 4.11 | 3.89 |
| M100 (MPa) | 1.45 | 1.59 |
| M300 (MPa) | 1.65 | 2.07 |
| M300/M100 | 1.14 | 1.30 |
| PH (%) | 30.9 | 24.9 |
| contrainte rupture (MPa) | 19.6 | 20.1 |
| allongement rupture (%) | 600 | 536 |

Tableau 13

| Composition N° : | 17 | 18 | 19 | 20 |
|---|---|---|---|---|
| SBR (1) | 88.5 | 88.5 | 88.5 | 88.5 |
| BR (2) | 25 | 25 | 25 | 25 |
| silice (3) | 80 | 80 | 80 | 80 |
| huile aromatique | 21.5 | 21.5 | 21.5 | 21.5 |
| TESPT (Si69) | 6.4 | 6.4 | 6.4 | 6.4 |
| 1,2-DHP (4) | - | 0.5 | 0.5 | 0.5 |
| ZnO | 2.5 | 2.5 | 2.5 | 2.5 |
| acide stéarique | 2 | 2 | 2 | 2 |
| antioxydant (5) | 1.9 | 1.9 | 1.9 | 1.9 |
| DPG (6) | 1.5 | - | 1.5 | - |
| DOTG (10) | - | - | - | 1.5 |
| soufre | 1.1 | 1.1 | 1.1 | 1.1 |
| CBS (7) | 2 | 2 | 2 | 2 |

(1) à (7) idem tableau 1; (10) DOTG de la société Vanderbilt, formule (III-2).

Tableau 14

| Composition N° : | 17 | 18 | 19 | 20 |
|---|---|---|---|---|
| *Propriétés avant cuisson:* | | | | |
| Mooney (UM) | 80 | 123 | 95 | 90 |
| T5 (min) | 20 | 22 | 12 | 17 |
| *Propriétés après cuisson:* | | | | |
| M10 (MPa) | 5.07 | 4.78 | 5.30 | 5.37 |
| M100 (MPa) | 1.55 | 1.60 | 1.98 | 1.83 |

Tableau 14 (suite)

| Composition N° : | 17 | 18 | 19 | 20 |
|---|---|---|---|---|
| *Propriétés après cuisson:* | | | | |
| M300 (MPa) | 1.85 | 1.84 | 2.77 | 2.41 |
| M300/M100 | 1.19 | 1.15 | 1.40 | 1.32 |
| PH (%) | 31 | 33 | 25 | 27 |
| contrainte rupture (MPa) | 22.0 | 21.2 | 21.7 | 20.5 |
| allongement rupture (%) | 585 | 585 | 442 | 465 |

Tableau 15

| Composition N° : | 21 | 22 | 23 |
|---|---|---|---|
| SBR (1) | 88.5 | 88.5 | 88.5 |
| BR (2) | 25 | 25 | 25 |
| silice (3) | 80 | 80 | 80 |
| huile aromatique | 21.5 | 21.5 | 21.5 |
| TESPD (Si266) | 5.6 | 3.5 | 3.5 |
| 1,2-DHP (4) | - | - | 0.5 |
| ZnO | 2.5 | 2.5 | 2.5 |
| acide stéarique | 2 | 2 | 2 |
| antioxydant (5) | 1.9 | 1.9 | 1.9 |
| DPG (6) | 1.5 | 1.5 | 1.5 |
| soufre | 1.1 | 1.1 | 1.1 |
| CBS (7) | 2 | 2 | 2 |
| (1) à (7) idem tableau 1. | | | |

Tableau 16

| Composition N° : | 21 | 22 | 23 |
|---|---|---|---|
| *Propriétés avant cuisson:* | | | |
| Mooney (UM) | 81 | 110 | 108 |
| T5 (min) | 28 | 23 | 18 |
| *Propriétés après cuisson:* | | | |
| M10 (MPa) | 4.95 | 5.66 | 5.69 |
| M100 (MPa) | 1.32 | 1.27 | 1.40 |
| M300 (MPa) | 1.40 | 1.14 | 1.42 |
| M300 / M100 | 1.06 | 0.90 | 1.01 |
| PH (%) | 35 | 40 | 35 |
| contrainte rupture (MPa) | 20.4 | 18.9 | 21.2 |
| allongement rupture (%) | 737 | 819 | 747 |

Tableau 17

| Composition N° : | 24 | 25 |
|---|---|---|
| SBR (1) | 88.5 | 88.5 |
| BR (2) | 25 | 25 |
| silice (3) | 80 | 80 |
| huile aromatique | 21.5 | 21.5 |
| ASPS (11) | 6.4 | 6.4 |
| 1,2-DHP (4) | - | 0.5 |
| ZnO | 2.5 | 2.5 |
| acide stéarique | 2 | 2 |
| antioxydant (5) | 1.9 | 1.9 |
| DPG (6) | 1.5 | 1.5 |
| soufre | 1.1 | 1.1 |
| CBS (7) | 2 | 2 |

(1) à (7) idem tableau 1 ; (11) ASPS type polymérique (WO96/10604).

Tableau 18

| Composition N° : | 24 | 25 |
|---|---|---|
| *Propriétés avant cuisson:* | | |
| Mooney (UM) | 86 | 86 |
| T5(min) | 20 | 15 |
| *Propriétés après cuisson:* | | |
| M10 (MPa) | 5.39 | 5.74 |
| M100 (MPa) | 1.69 | 1.93 |
| M300 (MPa) | 2.09 | 2.50 |
| M300/M100 | 1.24 | 1.30 |
| PH (%) | 31 | 28 |
| contrainte rupture (MPa) | 20.5 | 22.2 |
| allongement rupture (%) | 582 | 552 |

Tableau 19

| Composition N° : | 26 | 27 | 28 | 29 | 30 | 31 |
|---|---|---|---|---|---|---|
| SBR (1) | 88.5 | 88.5 | 88.5 | 88.5 | 88.5 | 88.5 |
| BR (2) | 25 | 25 | 25 | 25 | 25 | 25 |
| silice (3) | 80 | 80 | 80 | 80 | 80 | 80 |
| huile aromatique | 21.5 | 21.5 | 21.5 | 21.5 | 21.5 | 21.5 |
| TESPT (Si69) | 6.4 | 4 | 4 | 4 | 4 | 4 |
| 1,2-DHP (4) | - | - | 0.5 | 0.5 | 0.5 | 0.5 |
| ZnO | 2.5 | 2.5 | 2.5 | 2.5 | 2.5 | 2.5 |
| cire antiozone | 1.5 | 1.5 | 1.5 | 1.5 | 1.5 | 1.5 |
| acide stéarique | 2 | 2 | 2 | 2 | 2 | 2 |
| antioxydant (5) | 1.9 | 1.9 | 1.9 | 1.9 | 1.9 | 1.9 |

Tableau 19 (suite)

| Composition N° : | 26 | 27 | 28 | 29 | 30 | 31 |
|---|---|---|---|---|---|---|
| DPG (6) | 1.5 | 1.5 | 1.5 | 1.5 | 1.5 | 1.5 |
| agent recouvrement (12) | - | - | - | 2.4 | - | - |
| agent recouvrement (13) | - | - | - | - | 1.6 | - |
| agent recouvrement (14) | - | - | - | - | - | 0.5 |
| soufre | 1.1 | 1.1 | 1.1 | 1.1 | 1.1 | 1.1 |
| CBS (7) | 2 | 2 | 2 | 2 | 2 | 2 |

(1) à (7) idem tableau 1 ;
(12) octyltriéthoxysilane ("Dynasylan Octeo" de la société Hüls);
(13) hexadécyltriméthoxysilane ("Si116" de la société Degussa);
(14) α,ω-dihydroxy-polydiméthylsiloxane (huile "Rhodorsil 48V50" de la société Rhodia).

Tableau 20

| Composition N° : | 26 | 27 | 28 | 29 | 30 | 31 |
|---|---|---|---|---|---|---|
| *Propriétés avant cuisson:* | | | | | | |
| Mooney (UM) | 76 | 96 | 91 | 82 | 71 | 79 |
| T5 (min) | 22 | 20 | 11 | 13 | 16 | 14 |
| *Propriétés après cuisson:* | | | | | | |
| M10 (MPa) | 5.41 | 5.25 | 5.03 | 4.93 | 4.13 | 4.96 |
| M100 (MPa) | 1.71 | 1.37 | 1.62 | 1.63 | 1.52 | 1.60 |
| M300 (MPa) | 2.13 | 1.48 | 2.02 | 2.16 | 2.00 | 2.06 |
| M300/M100 | 1.25 | 1.08 | 1.25 | 1.33 | 1.32 | 1.29 |
| PH (%) | 28 | 35 | 30 | 27 | 26 | 28 |
| contrainte rupture (MPa) | 22.8 | 22.7 | 22.9 | 23.8 | 24.2 | 23.7 |
| allongement rupture (%) | 574 | 717 | 565 | 578 | 617 | 577 |

**Revendications**

1. Composition de caoutchouc utilisable pour la fabrication de pneumatiques, à base d'au moins : (i) un élastomère diénique, (ii) une charge inorganique à titre de charge renforçante, (iii) un alkoxysilane polysulfuré ("ASPS") à titre d'agent de couplage (charge inorganique/élastomère diénique) auquel sont associés (iv) une 1,2-dihydropyridine ("1,2-DHP") et (v) un dérivé guanidique.

2. Composition selon la revendication 1, l'élastomère diénique étant choisi dans le groupe constitué par les polybutadiènes, les polyisoprènes, le caoutchouc naturel, les copolymères de butadiène, les copolymères d'isoprène et les mélanges de ces élastomères.

3. Composition selon les revendications 1 ou 2, la charge inorganique renforçante étant une charge siliceuse ou alumineuse, de préférence une silice hautement dispersible.

4. Composition selon l'une quelconque des revendications 1 à 3, l'ASPS étant un polysulfure de bis-alkoxyl($C_1$-$C_4$) silylalkyle($C_1$-$C_{10}$).

5. Composition selon l'une quelconque des revendications 1 à 4, la 1,2-DHP étant présente sous la forme d'un condensat (aldéhyde-amine primaire).

**6.** Composition selon l'une quelconque des revendications 1 à 5, la 1,2-DHP étant une N-phényl-1,2-dihydropyridine.

**7.** Composition selon l'une quelconque des revendications 1 à 6, dans laquelle la quantité de 1,2-DHP représente entre 1 % et 20% en poids par rapport à la quantité d'ASPS.

**8.** Composition selon l'une quelconque des revendications 1 à 7, dans laquelle la quantité totale d'ASPS et de 1,2-DHP représente moins de 10% en poids par rapport à la quantité de charge inorganique renforçante.

**9.** Composition selon l'une quelconque des revendications 1 à 8, dans laquelle le dérivé guanidique est la N,N'-diphénylguanidine (DPG).

**10.** Composition selon l'une quelconque des revendications 1 à 9, dans laquelle la quantité de dérivé guanidique représente entre 0,5 et 4% en poids par rapport à la quantité de charge inorganique renforçante.

**11.** Composition selon l'une quelconque des revendications 1 à 10, dans laquelle la quantité totale d'ASPS, de 1,2-DHP et de dérivé guanidique représente entre 2% et 20% en poids par rapport à la quantité de charge inorganique renforçante.

**12.** Composition selon l'une quelconque des revendications 2 à 11, l'élastomère diénique étant un copolymère de butadiène-styrène (SBR) ayant une teneur en styrène comprise entre 20% et 30% en poids, une teneur en liaisons vinyliques de la partie butadiénique comprise entre 15% et 65%, une teneur en liaisons trans-1,4 comprise entre 20% et 75% et une température de transition vitreuse comprise entre -20°C et -55°C.

**13.** Composition selon la revendication 12, le SBR étant un SBR préparé en solution.

**14.** Composition selon les revendications 12 ou 13, le SBR étant utilisé en mélange avec un polybutadiène possédant de préférence plus de 90% de liaisons cis-1,4.

**15.** Composition selon l'une quelconque des revendications 1 à 14, la charge inorganique renforçante constituant la totalité de la charge renforçante.

**16.** Composition selon l'une quelconque des revendications 1 à 14, la charge inorganique renforçante étant utilisée en mélange avec du noir de carbone.

**17.** Composition selon l'une quelconque des revendications 4 à 16, l'ASPS étant un polysulfure de bis-alkoxyl($C_1$-$C_4$) silylpropyle.

**18.** Composition selon la revendication 17, l'ASPS étant le disulfure ou le tétrasulfure de bis-triéthoxysilylpropyle.

**19.** Composition selon l'une quelconque des revendications 5 à 18, l'aldéhyde du condensat étant choisi parmi les aldéhydes en $C_2$-$C_{12}$.

**20.** Composition selon la revendication 19, l'aldéhyde étant choisi parmi propionaldéhyde, butyraldéhyde, valéraldéhyde et hexaldéhyde.

**21.** Composition selon la revendication 20, l'aldéhyde étant le butyraldéhyde.

**22.** Composition selon l'une quelconque des revendications 5 à 21, la teneur en 1,2-DHP du condensat étant supérieure à 50% en poids.

**23.** Composition selon l'une quelconque des revendications 6 à 22, la 1,2-DHP étant la 3,5-diéthyl-1,2-dihydro-1-phényl-2-propylpyridine.

**24.** Composition selon l'une quelconque des revendications 1 à 23, comportant un agent de recouvrement de la charge inorganique.

**25.** Composition selon la revendication 24, l'agent de recouvrement étant un polyorganosiloxane hydroxylé.

**26.** Composition selon la revendication 25, l'agent de recouvrement étant un α,ω-dihydroxy-polyorganosiloxane, utilisé de préférence à un taux inférieur à 1 pce.

**27.** Composition selon l'une quelconque des revendications 1 à 26 **caractérisée en ce qu'**elle se trouve à l'état vulcanisé.

**28.** Procédé pour préparer une composition de caoutchouc vulcanisable au soufre et utilisable pour la fabrication de pneumatiques, **caractérisé en ce qu'**on incorpore à (i) un élastomère diénique, au moins : (ii) une charge inorganique à titre de charge renforçante ; (iii) un alkoxysilane polysulfuré ("ASPS") ; (iv) une 1,2-dihydropyridine ("1,2-DHP") et (v) un dérivé guanidique, et **en ce qu'**on malaxe thermomécaniquement le tout, en une ou plusieurs étapes, jusqu'à atteindre une température maximale comprise entre 120°C et 190°C.

**29.** Procédé selon la revendication 28, l'élastomère diénique étant choisi dans le groupe constitué par les polybutadiènes, les polyisoprènes, le caoutchouc naturel, les copolymères de butadiène, les copolymères d'isoprène et les mélanges de ces élastomères.

**30.** Procédé selon les revendications 28 ou 29, la charge inorganique renforçante étant une charge siliceuse ou alumineuse, de préférence une silice hautement dispersible.

**31.** Procédé selon l'une quelconque des revendications 28 à 30, l'ASPS étant un polysulfure de bis-alkoxyl($C_1$-$C_4$) silylalkyle($C_1$-$C_{10}$).

**32.** Procédé selon l'une quelconque des revendications 28 à 31, la 1,2-DHP étant présente sous la forme d'un condensat (aldéhyde-amine primaire).

**33.** Procédé selon l'une quelconque des revendications 28 à 32, la 1,2-DHP étant une N-phényl-1,2-dihydropyridine.

**34.** Procédé selon l'une quelconque des revendications 28 à 33, la quantité de 1,2-DHP représentant entre 1% et 20% en poids par rapport à la quantité d'ASPS.

**35.** Procédé selon l'une quelconque des revendications 28 à 34, la quantité totale d'ASPS et de 1,2-DHP représentant moins de 10% en poids par rapport à la quantité de charge inorganique renforçante.

**36.** Procédé selon l'une quelconque des revendications 28 à 35, le dérivé guanidique étant la N,N'-diphénylguanidine (DPG).

**37.** Procédé selon l'une quelconque des revendications 28 à 36, la quantité de dérivé guanidique représentant entre 0,5 et 4% en poids par rapport à la quantité de charge inorganique renforçante.

**38.** Procédé selon l'une quelconque des revendications 28 à 37, la quantité totale d'ASPS, de 1,2-DHP et de dérivé guanidique représentant entre 2% et 20% en poids par rapport à la quantité de charge inorganique renforçante.

**39.** Procédé selon l'une quelconque des revendications 32 à 38, l'aldéhyde du condensat étant choisi parmi les aldéhydes en $C_2$-$C_{12}$.

**40.** Procédé selon la revendication 39, l'aldéhyde étant choisi parmi propionaldéhyde, butyraldéhyde, valéraldéhyde et hexaldéhyde.

**41.** Procédé selon la revendication 40, l'aldéhyde étant le butyraldéhyde.

**42.** Procédé selon l'une quelconque des revendications 32 à 41, la teneur en 1,2-DHP du condensat étant supérieure à 50% en poids.

**43.** Procédé selon l'une quelconque des revendications 33 à 42, la 1,2-DHP étant la 3,5-diéthyl-1,2-dihydro-1-phényl-2-propylpyridine.

**44.** Procédé selon l'une quelconque des revendications 28 à 43, **caractérisé en ce qu'**on incorpore en outre un agent de recouvrement de la charge inorganique.

**45.** Procédé selon la revendication 44, l'agent de recouvrement étant un polyorganosiloxane hydroxylé.

**46.** Procédé selon la revendication 45, l'agent de recouvrement étant un $\alpha,\omega$-dihydroxy-polyorganosiloxane, utilisé de préférence à un taux inférieur à 1 pce.

**47.** Procédé selon l'une quelconque des revendications 28 à 46, la température maximale de malaxage étant comprise entre 130°C et 180°C.

**48.** Utilisation d'une composition de caoutchouc conforme à l'une quelconque des revendications 1 à 26, pour la fabrication de pneumatiques ou de produits semi-finis en caoutchouc destinés aux pneumatiques, ces produits semi-finis étant choisis en particulier dans le groupe constitué par les bandes de roulement, les sous-couches, les nappes sommet, les flancs, les nappes carcasse, les talons, les protecteurs, les chambres à air et les gommes intérieures étanches pour pneumatique sans chambre.

**49.** Pneumatique à l'état cru comportant une composition de caoutchouc conforme à l'une quelconque des revendications 1 à 26.

**50.** Pneumatique vulcanisé comportant une composition de caoutchouc conforme à la revendication 27.

**51.** Produit semi-fini en caoutchouc pour pneumatique, comportant une composition de caoutchouc conforme à l'une quelconque des revendications 1 à 26, ce produit semi-fini étant choisi en particulier dans le groupe constitué par les bandes de roulement, les sous-couches, les nappes sommet, les flancs, les nappes carcasse, les talons, les protecteurs, les chambres à air et les gommes intérieures étanches pour pneu sans chambre.

**52.** Produit semi-fini selon la revendication 51, se présentant sous la forme d'une bande de roulement de pneumatique.

**53.** Bande de roulement de pneumatique selon la revendication 52, **caractérisée en ce qu'**elle comporte une composition de caoutchouc selon l'une quelconque des revendications 12 à 14.

**54.** Procédé pour coupler une charge inorganique et un élastomère diénique, dans une composition de caoutchouc, **caractérisé en ce qu'**on incorpore à (i) un élastomère diénique, au moins : (ii) une charge inorganique à titre de charge renforçante ; (iii) un alkoxysilane polysulfuré ("ASPS") ; (iv) une 1,2-dihydropyridine ("1,2-DHP") et (v) un dérivé guanidique, et **en ce qu'**on malaxe thermomécaniquement le tout, en une ou plusieurs étapes, jusqu'à atteindre une température maximale comprise entre 120°C et 190°C.

**55.** Procédé selon la revendication 54, l'élastomère diénique étant choisi dans le groupe constitué par les polybutadiènes, les polyisoprènes, le caoutchouc naturel, les copolymères de butadiène, les copolymères d'isoprène et les mélanges de ces élastomères.

**56.** Procédé selon les revendications 54 ou 55, la charge inorganique renforçante étant une charge siliceuse ou alumineuse, de préférence une silice hautement dispersible.

**57.** Procédé selon l'une quelconque des revendications 54 à 56, l'ASPS étant un polysulfure de bis-alkoxyl($C_1$-$C_4$) silylalkyle($C_1$-$C_{10}$).

**58.** Procédé selon l'une quelconque des revendications 54 à 57, la 1,2-DHP étant présente sous la forme d'un condensat (aldéhyde-amine primaire).

**59.** Procédé selon l'une quelconque des revendications 54 à 58, la 1,2-DHP étant une N-phényl-1,2-dihydropyridine.

**60.** Procédé selon l'une quelconque des revendications 54 à 59, le dérivé guanidique étant la N,N'-diphénylguanidine (DPG).

**61.** Utilisation en combinaison d'une 1,2-dihydropyridine et d'un dérivé guanidique, dans une composition de caoutchouc à base d'élastomère diénique renforcée d'une charge inorganique, pour activer la fonction de couplage (charge inorganique/élastomère diénique) d'un alkoxysilane polysulfuré.

**62.** Système de couplage (charge inorganique/élastomère diénique) pour composition de caoutchouc à base d'élastomère diénique renforcée d'une charge inorganique, **caractérisé en ce qu'**il est constitué par l'association d'un alkoxysilane polysulfuré ("ASPS"), d'un dérivé guanidique et d'une 1,2-dihydropyridine ("1,2-DHP").

**63.** Système de couplage selon la revendication 62, l'ASPS étant un polysulfure de bis-alkoxyl($C_1$-$C_4$)silylalkyle ($C_1$-$C_{10}$).

**64.** Système de couplage selon les revendications 62 ou 63, la 1,2-DHP se présentant sous la forme d'un condensat (aldéhyde-amine primaire).

**65.** Système de couplage selon l'une quelconque des revendications 62 à 64, la 1,2-DHP étant une N-phényl-1,2-dihydropyridine.

**66.** Système de couplage selon l'une quelconque des revendications 62 à 65, la quantité de 1,2-DHP représentant entre 1% et 20% en poids par rapport à la quantité d'ASPS.

**67.** Système de couplage selon l'une quelconque des revendications 62 à 66, le dérivé guanidique étant la N,N'-diphénylguanidine (DPG).

**68.** Système de couplage selon l'une quelconque des revendications 63 à 67, l'ASPS étant un polysulfure de bis-alkoxyl($C_1$-$C_4$)silylpropyle.

**69.** Système de couplage selon l'une quelconque des revendications 64 à 68, l'aldéhyde du condensat étant choisi parmi propionaldéhyde, butyraldéhyde, valéraldéhyde et hexaldéhyde.

**70.** Système de couplage selon la revendication 69, l'aldéhyde étant le butyraldéhyde.

**71.** Système de couplage selon l'une quelconque des revendications 64 à 70, la teneur en 1,2-DHP du condensat étant supérieure à 50% en poids.

**72.** Système de couplage selon l'une quelconque des revendications 65 à 71, la 1,2-DHP étant la 3,5-diéthyl-1,2-dihydro-1-phényl-2-propylpyridine.

**73.** Utilisation d'un système de couplage selon l'une quelconque des revendications 62 à 72 pour le couplage d'une charge inorganique renforçante et d'un élastomère diénique dans une composition de caoutchouc à base d'élastomère diénique renforcée d'une charge inorganique.

**Patentansprüche**

**1.** Kautschukzusammensetzung, die für die Herstellung von Luftreifen verwendbar ist, auf der Basis von mindestens : (i) ein Dienelastomer, (ii) einen anorganischen Füllstoff als verstärkenden Füllstoff, (iii) ein Alkoxysilanpolysulfid ("ASPS") als Kupplungsmittel (anorganischer Füllstoff/Dienelastomer), das mit (iv) einem 1,2-Dihydropyridin ("1,2-DHP") und (v) einem Guanidinderivat kombiniert ist.

**2.** Zusammensetzung nach Anspruch 1, wobei das Dienelastomer unter den Polybutadienen, den Polyisoprenen, Naturkautschuk, den Butadiencopolymeren, den Isoprencopolymeren und den Gemischen dieser Elastomere ausgewählt ist.

**3.** Zusammensetzung nach Anspruch 1 oder 2, wobei der verstärkende anorganische Füllstoff ein Kieselsäure- oder Aluminiumoxidfüllstoff und vorzugsweise eine hochdisperse Kieselsäure ist.

**4.** Zusammensetzung nach einem der Ansprüche 1 bis 3, wobei es sich bei dem ASPS um ein Bis-($C_{1-4}$)-alkoxysilyl-($C_{1-10}$)-alkylpolysulfid handelt.

**5.** Zusammensetzung nach einem der Ansprüche 1 bis 4, wobei das 1,2-DHP in Form eines Kondensats (Aldehyd - primäres Amin) vorliegt.

**6.** Zusammensetzung nach einem der Ansprüche 1 bis 5, wobei das 1,2-DHP ein N-Phenyl-1,2-dihydropyridin ist.

7. Zusammensetzung nach einem der Ansprüche 1 bis 6, wobei das 1,2-DHP in einer Menge von 1 bis 20 Gew.-%, bezogen auf die Menge an ASPS, enthalten ist.

8. Zusammensetzung nach einem der Ansprüche 1 bis 7, wobei die Gesamtmenge an ASPS und 1,2-DHP weniger als 10 Gew.-%, bezogen auf die Menge des verstärkenden anorganischen Füllstoffs, beträgt.

9. Zusammensetzung nach einem der Ansprüche 1 bis 8, wobei es sich bei dem Guanidinderivat um N,N'-Diphenylguanidin (DPG) handelt.

10. Zusammensetzung nach einem der Ansprüche 1 bis 9, wobei die Menge des Guanidinderivats im Bereich von 0,5 bis 4 Gew.-%, bezogen auf die Menge des verstärkenden anorganischen Füllstoffs, liegt.

11. Zusammensetzung nach einem der Ansprüche 1 bis 10, wobei die Gesamtmenge an ASPS, 1,2-DHP und Guanidinderivat im Bereich von 2 bis 20 Gew.-%, bezogen auf die Menge des verstärkenden anorganischen Füllstoffs, liegt.

12. Zusammensetzung nach einem der Ansprüche 2 bis 11, wobei das Dienelastomer ein Butadien-Styrol-Copolymer (SBR) ist, das einen Styrolgehalt, der im Bereich von 20 bis 30 Gew.-%, einen Anteil an Vinylbindungen im Butadienteil, der im Bereich von 15 bis 65 % liegt, einen Anteil an trans-1,4-Bindungen, der im Bereich von 20 bis 75 % liegt, und eine Glasübergangstemperatur im Bereich von - 20 bis -55 °C aufweist.

13. Zusammensetzung nach Anspruch 12, wobei der SBR ein SBR ist, der durch Lösungspolymerisation hergestellt wurde.

14. Zusammensetzung nach einem der Ansprüche 12 und 13, wobei der SBR im Gemisch mit einem Polybutadien verwendet wird, das vorzugsweise mehr als 90 % cis-1,4-Bindungen enthält.

15. Zusammensetzung nach einem der Ansprüche 1 bis 14, wobei der verstärkende Füllstoff vollständig aus dem verstärkenden anorganischen Füllstoff besteht.

16. Zusammensetzung nach einem der Ansprüche 1 bis 14, wobei der verstärkende anorganische Füllstoff im Gemisch mit Ruß verwendet wird.

17. Zusammensetzung nach einem der Ansprüche 4 bis 16, wobei das ASPS ein Bis-($C_{1-4}$)-alkoxysilylpropylpolysulfid ist.

18. Zusammensetzung nach Anspruch 17, wobei es sich bei dem ASPS um Bis-triethoxysilylpropyldisulfid oder -tetrasulfid handelt.

19. Zusammensetzung nach einem der Ansprüche 5 bis 18, wobei der Aldehyd des Kondensats unter den $C_{2-12}$-Aldehyden ausgewählt ist.

20. Zusammensetzung nach Anspruch 19, wobei der Aldehyd unter Propionaldehyd, Butyraldehyd, Valeraldehyd und Hexaldehyd ausgewählt ist.

21. Zusammensetzung nach Anspruch 20, wobei es sich bei dem Aldehyd um Butyraldehyd handelt.

22. Zusammensetzung nach einem der Ansprüche 5 bis 21, wobei das Kondensat mehr als 50 Gew.-% 1,2-DHP enthält.

23. Zusammensetzung nach einem der Ansprüche 6 bis 22, wobei es sich bei dem 1,2-DHP um 3,5-Diethyl-1,2-dihydro-1-phenyl-2-propylpyridin handelt.

24. Zusammensetzung nach einem der Ansprüche 1 bis 23, die ein Mittel zur Beschichtung des anorganischen Füllstoffs enthält.

25. Zusammensetzung nach Anspruch 24, wobei es sich bei dem Beschichtungsmittel um ein hydroxyliertes Polyorganosiloxan handelt.

**26.** Zusammensetzung nach Anspruch 25, wobei es sich bei dem Beschichtungsmittel um ein $\alpha,\omega$-Dihydroxypolyorganosiloxan handelt, das vorzugsweise in einem Anteil von weniger als 1 pce verwendet wird.

**27.** Zusammensetzung nach einem der Ansprüche 1 bis 26, **dadurch gekennzeichnet, dass** sie in vulkanisiertem Zustand vorliegt.

**28.** Verfahren zur Herstellung einer mit Schwefel vulkanisierbaren und für die Herstellung von Luftreifen verwendbaren Zusammensetzung, **dadurch gekennzeichnet, dass** in (i) ein Dienelastomer mindestens eingebracht werden: (ii) ein anorganischer Füllstoff als verstärkender Füllstoff; (iii) ein Alkoxysilanpolysulfid ("ASPS"); iv) ein 1,2-Dihydropyridin ("1,2-DHP") und (v) ein Guanidinderivat, und dass das Ganze in einer oder mehreren Stufen thermomechanisch geknetet wird, bis eine Maximaltemperatur erreicht wird, die im Bereich von 120 bis 190 °C liegt.

**29.** Verfahren nach Anspruch 28, wobei das Dienelastomer unter den Polybutadienen, den Polyisoprenen, Naturkautschuk, den Butadiencopolymeren, den Isoprencopolymeren und den Gemischen dieser Elastomere ausgewählt wird.

**30.** Verfahren nach Anspruch 28 oder 29, wobei der verstärkende anorganische Füllstoff ein Kieselsäure- oder Aluminiumoxidfüllstoff und vorzugsweise eine hochdisperse Kieselsäure ist.

**31.** Verfahren nach einem der Ansprüche 28 bis 30, wobei es sich bei dem ASPS um ein Bis-($C_{1-4}$)-alkoxysilyl-($C_{1-10}$)-alkylpolysulfid handelt.

**32.** Verfahren nach einem der Ansprüche 28 bis 31, wobei das 1,2-DHP in Form eines Kondensats (Aldehyd - primäres Amin) vorliegt.

**33.** Verfahren nach einem der Ansprüche 28 bis 32, wobei das 1,2-DHP ein N-Phenyl-1,2-dihydropyridin ist.

**34.** Verfahren nach einem der Ansprüche 28 bis 33, wobei das 1,2-DHP in einer Menge von 1 bis 20 Gew.-%, bezogen auf die Menge an ASPS, enthalten ist.

**35.** Verfahren nach einem der Ansprüche 28 bis 34, wobei die Gesamtmenge an ASPS und 1,2-DHP weniger als 10 Gew.-%, bezogen auf die Menge an verstärkendem anorganischem Füllstoff, beträgt.

**36.** Verfahren nach einem der Ansprüche 28 bis 35, wobei es sich bei dem Guanidinderivat um N,N'-Diphenylguanidin (DPG) handelt.

**37.** Verfahren nach einem der Ansprüche 28 bis 36, wobei die Menge des Guanidinderivats im Bereich von 0,5 bis 4 Gew.-%, bezogen auf die Menge an verstärkendem anorganischem Füllstoff, liegt.

**38.** Verfahren nach einem der Ansprüche 28 bis 37, wobei die Gesamtmenge an ASPS, 1,2-DHP und Guanidinderivat im Bereich von 2 bis 20 Gew.-%, bezogen auf die Menge an verstärkendem anorganischem Füllstoff, liegt.

**39.** Verfahren nach einem der Ansprüche 32 bis 38, wobei der für das Kondensat verwendete Aldehyd unter den $C_{2}$-$_{12}$-Aldehyden ausgewählt wird.

**40.** Verfahren nach Anspruch 39, wobei der Aldehyd unter Propionaldehyd, Butyraldehyd, Valeraldehyd und Hexaldehyd ausgewählt wird.

**41.** Verfahren nach Anspruch 40, wobei es sich bei dem Aldehyd um Butyraldehyd handelt.

**42.** Verfahren nach einem der Ansprüche 32 bis 41, wobei der Gehalt des Kondensats an 1,2-DHP größer als 50 Gew.-% ist.

**43.** Verfahren nach einem der Ansprüche 33 bis 42, wobei es sich bei dem 1,2-DHP um 3,5-Diethyl-1,2-dihydro-1-phenyl-2-propylpyridin handelt.

**44.** Verfahren nach einem der Ansprüche 28 bis 43, **dadurch gekennzeichnet, dass** außerdem ein Mittel zur Beschichtung des anorganischen Füllstoffs eingearbeitet wird.

**45.** Verfahren nach Anspruch 44, wobei es sich bei dem Beschichtungsmittel um ein hydroxyliertes Polyorganosiloxan handelt.

**46.** Verfahren nach Anspruch 45, wobei es sich bei dem Beschichtungsmittel um ein $\alpha,\omega$-Dihydroxypolyorganosiloxan handelt, das vorzugsweise in einem Anteil von weniger als 1 pce verwendet wird.

**47.** Verfahren nach einem der Ansprüche 28 bis 46, wobei die Maximaltemperatur beim Kneten im Bereich von 130 bis 180 °C liegt.

**48.** Verwendung einer Kautschukzusammensetzung nach einem der Ansprüche 1 bis 26 für die Herstellung von Luftreifen oder Halbfertigprodukten aus Kautschuk, die für Luftreifen vorgesehen sind, wobei diese Halbfertigprodukte insbesondere unter Laufstreifen, Unterschichten, Scheitellagen, Seitenwänden, Karkasslagen, Wülsten, Protektoren, Schläuchen und dichten Innengummis für schlauchlose Reifen ausgewählt werden.

**49.** Luftreifen in nicht vulkanisiertem Zustand, der eine Kautschukzusammensetzung nach einem der Ansprüche 1 bis 26 umfaßt.

**50.** Vulkanisierter Luftreifen, der eine Kautschukzusammensetzung nach Anspruch 27 umfaßt.

**51.** Halbfertigprodukt aus Kautschuk für Luftreifen, das eine Kautschukzusammensetzung nach einem der Ansprüche 1 bis 26 umfaßt, wobei dieses Halbfertigprodukt insbesondere unter Laufstreifen, Unterschichten, Scheitellagen, Seitenwänden, Karkasslagen, Wülsten, Protektoren, Schläuchen und dichten Innengummis für schlauchlose Reifen ausgewählt ist.

**52.** Halbfertigprodukt nach Anspruch 51, das in Form eines Laufstreifens eines Luftreifens vorliegt.

**53.** Laufstreifen eines Luftreifens nach Anspruch 52, **dadurch gekennzeichnet, dass** er eine Kautschukzusammensetzung nach einem der Ansprüche 12 bis 14 umfaßt.

**54.** Verfahren zum Kuppeln eines anorganischen Füllstoffs mit einem Dienelastomer in einer Kautschukzusammensetzung, **dadurch gekennzeichnet, dass** in (i) ein Dienelastomer mindestens eingebracht werden: (ii) ein anorganischer Füllstoff als verstärkender Füllstoff; (iii) ein Alkoxysilanpolysulfid ("ASPS"); iv) ein 1,2-Dihydropyridin ("1,2-DHP") und (v) ein Guanidinderivat, und dass das Ganze in einer oder mehreren Stufen thermomechanisch geknetet wird, bis eine Maximaltemperatur erreicht wird, die im Bereich von 120 bis 190 °C liegt.

**55.** Verfahren nach Anspruch 54, wobei das Dienelastomer unter den Polybutadienen, den Polyisoprenen, Naturkautschuk, den Butadiencopolymeren, den Isoprencopolymeren und den Gemischen dieser Elastomere ausgewählt wird.

**56.** Verfahren nach Anspruch 54 oder 55, wobei der verstärkende anorganische Füllstoff ein Kieselsäure- oder Aluminiumoxidfüllstoff und vorzugsweise eine hochdisperse Kieselsäure ist.

**57.** Verfahren nach einem der Ansprüche 54 bis 56, wobei es sich bei dem ASPS um ein Bis-($C_{1-4}$)-alkoxysilyl-($C_{1-10}$)-alkylpolysulfid handelt.

**58.** Verfahren nach einem der Ansprüche 54 bis 57, wobei das 1,2-DHP in Form eines Kondensats (Aldehyd - primäres Amin) enthalten ist.

**59.** Verfahren nach einem der Ansprüche 54 bis 58, wobei das 1,2-DHP ein N-Phenyl-1,2-dihydropyridin ist.

**60.** Verfahren nach einem der Ansprüche 54 bis 59, wobei es sich bei dem Guanidinderivat um N,N'-Diphenylguanidin (DPG) handelt.

**61.** Verwendung der Kombination aus einem 1,2-Dihydopyridin und einem Guanidinderivat in einer Kautschukzusammensetzung auf der Basis eines Dienelastomers, die mit einem anorganischen Füllstoff verstärkt ist, für die Aktivierung der Kupplungseigenschaften (anorganischer Füllstoff/Dienelastomer) eines Alkoxysilanpolysulfids.

**62.** Kupplungssystem (anorganischer Füllstoff/Dienelastomer) für Kautschukzusammensetzungen auf der Basis eines

Dienelastomers, die mit einem anorganischen Füllstoff verstärkt sind, **dadurch gekennzeichnet, dass** es aus der Kombination eines Alkoxysilanpolysulfids ("ASPS") mit einem Guanidinderivat und einem 1,2-Dihydropyridin ("1,2-DHP") besteht.

**63.** Kupplungssystem nach Anspruch 62, wobei es sich bei dem ASPS um ein Bis-($C_{1-4}$)-alkoxysilyl-($C_{1-10}$)-alkylpolysulfid handelt.

**64.** Kupplungssystem nach einem der Ansprüche 62 und 63, wobei das 1,2-DHP in Form eines Kondensats (Aldehyd - primäres Amin) vorliegt.

**65.** Kupplungssystem nach einem der Ansprüche 62 bis 64, wobei das 1,2-DHP ein N-Phenyl-1,2-dihydropyridin ist.

**66.** Kupplungssystem nach einem der Ansprüche 62 bis 65, wobei das 1,2-DHP in einer Menge von 1 bis 20 Gew.-%, bezogen auf die Menge an ASPS, enthalten ist.

**67.** Kupplungssystem nach einem der Ansprüche 62 bis 66, wobei es sich bei dem Guanidinderivat um N,N'-Diphenylguanidin (DPG) handelt.

**68.** Kupplungssystem nach einem der Ansprüche 63 bis 67, wobei das ASPS ein Bis-($C_{1-4}$)-alkoxysilylpropylpolysulfid ist.

**69.** Kupplungssystem nach einem der Ansprüche 64 bis 68, wobei der Aldehyd unter Propionaldehyd, Butyraldehyd, Valeraldehyd und Hexaldehyd ausgewählt ist.

**70.** Kupplungssystem nach Anspruch 69, wobei es sich bei dem Aldehyd um Butyraldehyd handelt.

**71.** Kupplungssystem nach einem der Ansprüche 64 bis 70, wobei der Gehalt des Kondensats an 1,2-DHP größer als 50 Gew.-% ist.

**72.** Kupplungssystem nach einem der Ansprüche 65 bis 71, wobei es sich bei dem 1,2-DHP um 3,5-Diethyl-1,2-dihydro-1-phenyl-2-propylpyridin handelt.

**73.** Verwendung eines Kupplungssystems nach einem der Ansprüche 62 bis 72 für die Kupplung eines verstärkenden anorganischen Füllstoffs mit einem Dienelastomer in einer Kautschukzusammensetzung auf der Basis eines Dienelastomers, die mit einem anorganischen Füllstoff verstärkt ist.

## Claims

**1.** A rubber composition usable for the manufacture of tyres, based on at least: (i) a diene elastomer, (ii) an inorganic filler as reinforcing filler, (iii) a polysulphurised alkoxysilane ("PSAS") as (inorganic filler/diene elastomer) coupling agent, with which are associated (iv) a 1,2-dihydropyridine ("1,2-DHP") and (v) a guanidine derivative.

**2.** A composition according to Claim 1, the diene elastomer being selected from among the group consisting of polybutadienes, polyisoprenes, natural rubber, butadiene copolymers, isoprene copolymers and mixtures of these elastomers.

**3.** A composition according to Claims 1 or 2, the reinforcing inorganic filler being a siliceous or aluminous filler, preferably a highly dispersible silica.

**4.** A composition according to any one of Claims 1 to 3, the PSAS being a bis-($C_1C_4$)alkoxysilyl($C_1$-$C_{10}$)alkyl polysulphide.

**5.** A composition according to any one of Claims 1 to 4, the 1,2-DHP being present in the form of an (aldehyde-primary amine) condensate.

**6.** A composition according to any one of Claims 1 to 5, the 1,2-DHP being a N-phenyl-1,2-dihydropyridine.

**7.** A composition according to any one of Claims 1 to 6, in which the quantity of 1,2-DHP represents between 1% and 20% by weight relative to the quantity of PSAS.

**8.** A composition according to any one of Claims 1 to 7, in which the total quantity of PSAS and of 1,2-DHP represents less than 10% by weight relative to the quantity of reinforcing inorganic filler.

**9.** A composition according to any one of Claims 1 to 8, in which the guanidine derivative is N,N'-diphenylguanidine (DPG).

**10.** A composition according to any one of Claims 1 to 9, in which the quantity of guanidine derivative represents between 0.5 and 4% by weight relative to the quantity of reinforcing inorganic filler.

**11.** A composition according to any one of Claims 1 to 10, in which the total quantity of PSAS, 1,2-DHP and guanidine derivative represents between 2% and 20% by weight relative to the quantity of reinforcing inorganic filler.

**12.** A composition according to any one of Claims 2 to 11, the diene elastomer being a butadiene-styrene copolymer (SBR) having a styrene content of between 20% and 30% by weight, a content of vinyl bonds of the butadiene part of between 15% and 65%, a content of trans-1,4 bonds of between 20% and 75% and a glass transition temperature of between -20°C and -55°C.

**13.** A composition according to Claim 12, the SBR being an SBR prepared in solution.

**14.** A composition according to Claims 12 or 13, the SBR being used in a mixture with a polybutadiene having preferably more than 90% cis-1,4 bonds.

**15.** A composition according to any one of Claims 1 to 14, the reinforcing inorganic filler constituting the entire reinforcing filler.

**16.** A composition according to any one of Claims 1 to 14, the reinforcing inorganic filler being used in a mixture with carbon black.

**17.** A composition according to any one of Claims 4 to 16, the PSAS being a bis-($C_1$-$C_4$)alkoxysilylpropyl polysulphide.

**18.** A composition according to Claim 17, the PSAS being bis-triethoxysilylpropyl disulphide or tetrasulphide.

**19.** A composition according to any one of Claims 5 to 18, the aldehyde of the condensate being selected from among $C_2$-$C_{12}$ aldehydes.

**20.** A composition according to Claim 19, the aldehyde being selected from among propionaldehyde, butyraldehyde, valeraldehyde and hexaldehyde.

**21.** A composition according to Claim 20, the aldehyde being butyraldehyde.

**22.** A composition according to any one of Claims 5 to 21, the content of 1,2-DHP of the condensate being greater than 50% by weight.

**23.** A composition according to any one of Claims 6 to 22, the 1,2-DHP being 3,5-diethyl-1,2-dihydro-1-phenyl-2-propylpyridine.

**24.** A composition according to any one of Claims 1 to 23, comprising a covering agent for the inorganic filler.

**25.** A composition according to Claim 24, the covering agent being a hydroxylated polyorganosiloxane.

**26.** A composition according to Claim 25, the covering agent being an $\alpha,\omega$-dihydroxy-polyorganosiloxane, preferably used in an amount of less than 1 phr.

**27.** A composition according to any one of Claims 1 to 26, **characterised in that** it is in the vulcanised state.

**28.** A process for preparing a sulphur-vulcanisable rubber composition usable for the manufacture of tyres, **characterised in that** there is incorporated in (i) a diene elastomer at least: (ii) an inorganic filler as reinforcing filler; (iii) a polysulphurised alkoxysilane ("PSAS"); (iv) a 1,2-dihydropyridine ("1,2-DHP") and (v) a guanidine derivative, and **in that** the entire mixture is kneaded thermomechanically, in one or more stages, until a maximum temperature of between 120°C and 190°C is reached.

**29.** A process according to Claim 28, the diene elastomer being selected from the group consisting of polybutadienes, polyisoprenes, natural rubber, butadiene copolymers, isoprene copolymers and mixtures of these elastomers.

**30.** A process according to Claims 28 or 29, the reinforcing inorganic filler being a siliceous or aluminous filler, preferably a highly dispersible silica.

**31.** A process according to any one of Claims 28 to 30, the PSAS being a bis-($C_1$-$C_4$)alkoxysilyl($C_1$-$C_{10}$)alkyl polysulphide.

**32.** A process according to any one of Claims 28 to 31, the 1,2-DHP being present in the form of an (aldehyde-primary amine) condensate.

**33.** A process according to any one of Claims 28 to 32, the 1,2-DHP being an N-phenyl-1,2-dihydropyridine.

**34.** A process according to any one of Claims 28 to 33, the quantity of 1,2-DHP representing between 1% and 20% by weight relative to the quantity of PSAS.

**35.** A process according to any one of Claims 28 to 34, the total quantity of PSAS and 1,2-DHP representing less than 10% by weight relative to the quantity of reinforcing inorganic filler.

**36.** A process according to any one of Claims 28 to 35, the guanidine derivative being N,N'-diphenylguanidine (DPG).

**37.** A process according to any one of Claims 28 to 36, the quantity of guanidine derivative representing between 0.5 and 4% by weight relative to the quantity of reinforcing inorganic filler.

**38.** A process according to any one of Claims 28 to 37, the total quantity of PSAS, 1,2-DHP and guanidine derivative representing between 2% and 20% by weight relative to the quantity of reinforcing inorganic filler.

**39.** A process according to any one of Claims 32 to 38, the aldehyde of the condensate being selected from among $C_2$-$C_{12}$ aldehydes.

**40.** A process according to Claim 39, the aldehyde being selected from among propionaldehyde, butyraldehyde, valeraldehyde and hexaldehyde.

**41.** A process according to Claim 40, the aldehyde being butyraldehyde.

**42.** A process according to any one of Claims 32 to 41, the content of 1,2-DHP of the condensate being greater than 50% by weight.

**43.** A process according to any one of Claims 33 to 42, the 1,2-DHP being 3,5-diethyl-1,2-dihydro-1-phenyl-2-propylpyridine.

**44.** A process according to any one of Claims 28 to 43, **characterised in that** there is furthermore incorporated a covering agent for the inorganic filler.

**45.** A process according to Claim 44, the covering agent being a hydroxylated polyorganosiloxane.

**46.** A process according to Claim 45, the covering agent being an $\alpha,\omega$-dihydroxy-polyorganosiloxane, preferably used in an amount of less than 1 phr.

**47.** A process according to any one of Claims 28 to 46, the maximum kneading temperature being between 130°C and 180°C.

**48.** The use of a rubber composition according to any one of Claims 1 to 26 for the manufacture of tyres or semi-finished rubber products intended for tyres, these semi-finished products being selected in particular from the group comprising treads, underlayers, crown plies, sidewalls, carcass plies, beads, protectors, inner tubes and airtight internal rubbers for tubeless tyres.

**49.** A tyre in the uncured state comprising a rubber composition according to any one of Claims 1 to 26.

**50.** A vulcanised tyre comprising a rubber composition according to Claim 27.

**51.** A semi-finished rubber product for tyres, comprising a rubber composition according to any one of Claims 1 to 26, this semi-finished product being selected in particular from among the group comprising treads, underlayers, crown plies, sidewalls, carcass plies, beads, protectors, inner tubes and airtight internal rubbers for tubeless tyres.

**52.** A semi-finished product according to Claim 51, in the form of a tyre tread.

**53.** A tyre tread according to Claim 52, **characterised in that** it comprises a rubber composition according to any one of Claims 12 to 14.

**54.** A process for coupling an inorganic filler and a diene elastomer, in a rubber composition, **characterised in that** there are incorporated in (i) one diene elastomer, at least: (ii) an inorganic filler as reinforcing filler; (iii) a polysulphurised alkoxysilane ("PSAS"); (iv) a 1,2-dihydropyridine ("1,2-DHP") and (v) a guanidine derivative, and **in that** the entire mixture is kneaded thermomechanically, in one or more stages, until a maximum temperature of between 120°C and 190°C is reached.

**55.** A process according to Claim 54, the diene elastomer being selected from the group consisting of polybutadienes, polyisoprenes, natural rubber, butadiene copolymers, isoprene copolymers and mixtures of these elastomers.

**56.** A process according to Claims 54 or 55, the reinforcing inorganic filler being a siliceous or aluminous filler, preferably a highly dispersible silica.

**57.** A process according to any one of Claims 54 to 56, the PSAS being a bis-($C_1$-$C_4$)alkoxysilyl($C_1$-$C_{10}$)alkyl polysulphide.

**58.** A process according to any one of Claims 54 to 57, the 1,2-DHP being present in the form of an (aldehyde-primary amine) condensate.

**59.** A process according to any one of Claims 54 to 58, the 1,2-DHP being an N-phenyl-1,2-dihydropyridine.

**60.** A process according to any one of Claims 54 to 59, the guanidine derivative being N,N'-diphenylguanidine (DPG).

**61.** The use in combination of a 1,2-dihydropyridine and a guanidine derivative in a rubber composition based on diene elastomer reinforced with an inorganic filler, in order to activate the coupling function (inorganic filler/diene elastomer) of a polysulphurised alkoxysilane.

**62.** A coupling system (inorganic filler/diene elastomer) for a rubber composition based on diene elastomer reinforced by a inorganic filler, **characterised in that** it is formed by the association of a polysulphurised alkoxysilane ("PSAS"), a guanidine derivative and a 1,2-dihydropyridine ("1,2-DHP").

**63.** A coupling system according to Claim 62, the PSAS being a bis-($C_1$-$C_4$)alkoxysilyl($C_1$-$C_{10}$)alkyl polysulphide.

**64.** A process according to Claims 62 or 63, the 1,2-DHP being present in the form of an (aldehyde-primary amine) condensate.

**65.** A coupling system according to any one of Claims 62 to 64, the 1,2-DHP being an N-phenyl-1,2-dihydropyridine.

**66.** A coupling system according to any one of Claims 62 to 65, the quantity of 1,2-DHP representing between 1% and 20% by weight relative to the quantity of PSAS.

**67.** A coupling system according to any one of Claims 62 to 66, the guanidine derivative being N,N'-diphenylguanidine (DPG).

**68.** A coupling system according to any one of Claims 63 to 67, the PSAS being a bis-($C_1$-$C_4$)alkoxysilylpropyl polysulphide.

**69.** A coupling system according to any one of Claims 64 to 68, the aldehyde of the condensate being selected from among propionaldehyde, butyraldehyde, valeraldehyde et hexaldehyde.

**70.** A coupling system according to Claim 59, the aldehyde being butyraldehyde.

**71.** A coupling system according to any one of Claims 64 to 70, the content of 1,2-DHP of the condensate being greater than 50% by weight.

**72.** A coupling system according to any one of Claims 65 to 71, the 1,2-DHP being 3,5-diethyl-1,2-dihydro-1-phenyl-2-propylpyridine.

**73.** The use of a coupling system according to any one of Claims 62 to 72 for coupling a reinforcing inorganic filler and a diene elastomer in a rubber composition based on diene elastomer reinforced with an inorganic filler.

**Fig. 1**

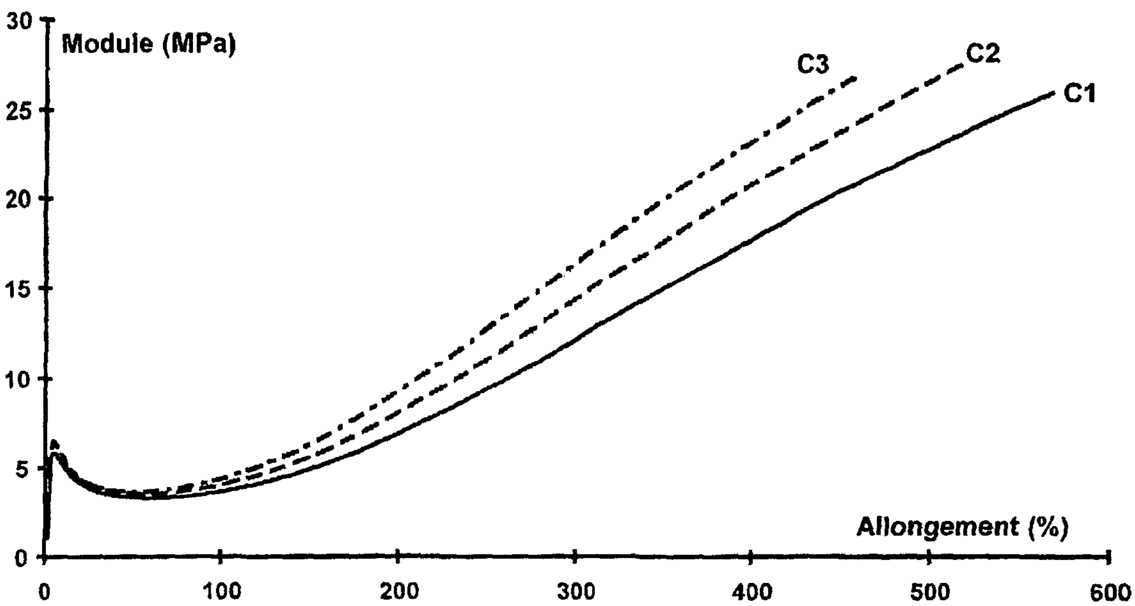
Module (MPa)
30
25
20
15
10
5
0
C3
C2
C1
Allongement (%)
0
100
200
300
400
500
600

**Fig. 2**

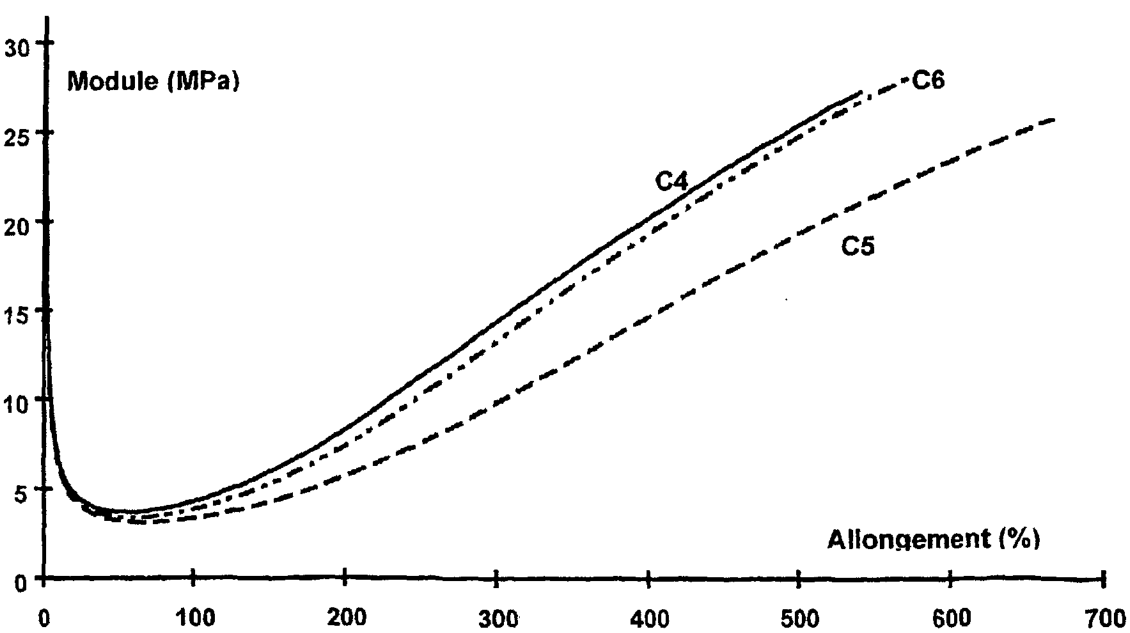
Module (MPa)
30
25
20
15
10
5
0
C6
C4
C5
Allongement (%)
0
100
200
300
400
500
600
700

Fig. 3

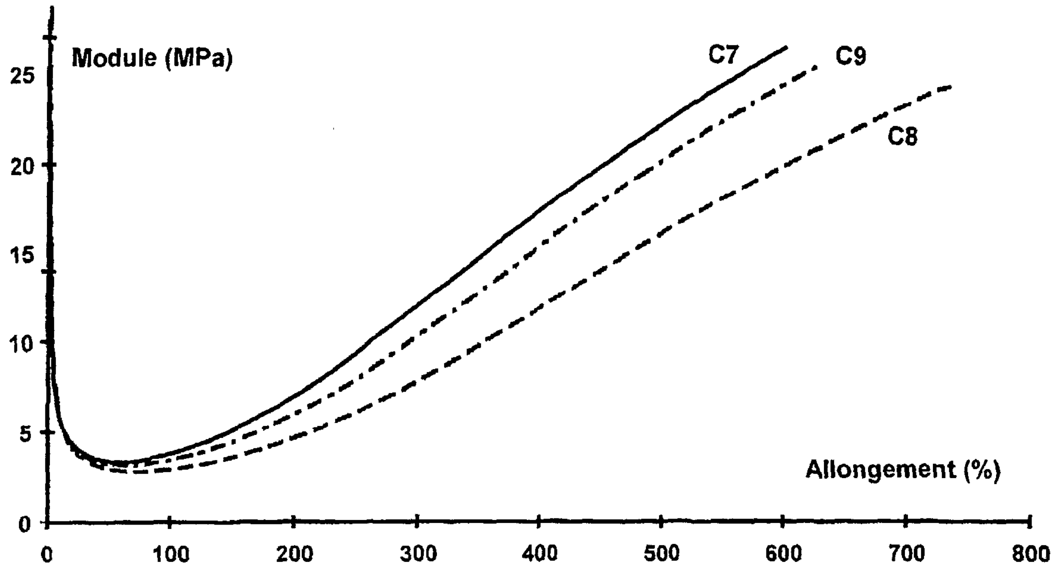
Module (MPa)
25
20
15
10
5
0
C7
C9
C8
Allongement (%)
0
100
200
300
400
500
600
700
800

Fig. 4

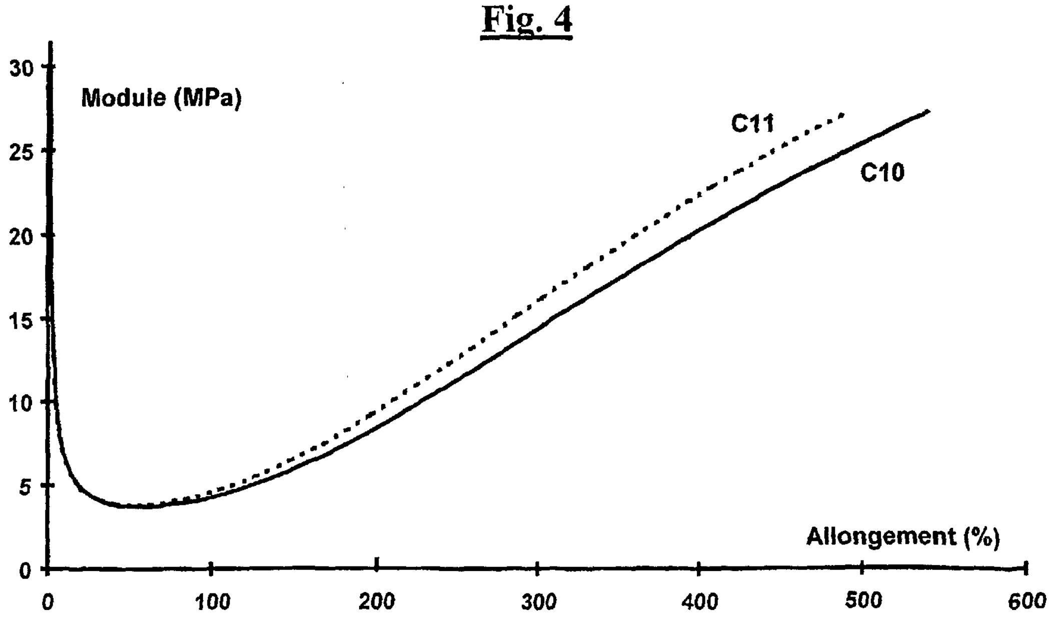
30
Module (MPa)
25
20
15
10
5
0
C11
C10
Allongement (%)
0
100
200
300
400
500
600

**Fig. 5**

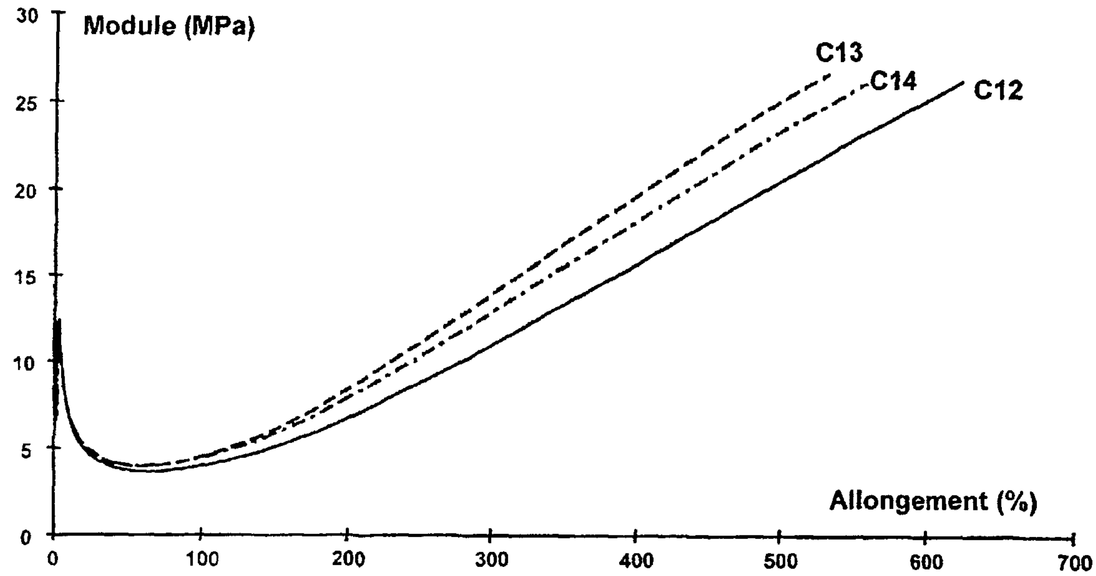
Module (MPa)
30
25
20
15
10
5
0
C13
C14
C12
Allongement (%)
0
100
200
300
400
500
600
700

**Fig. 6**

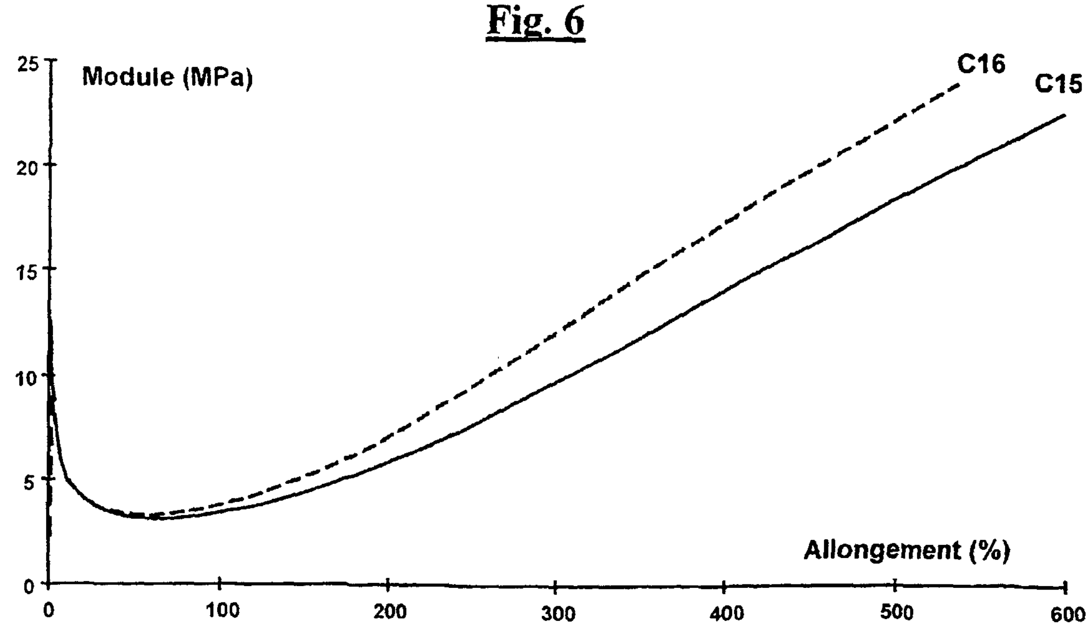
Module (MPa)
25
20
15
10
5
0
C16
C15
Allongement (%)
0
100
200
300
400
500
600

**Fig. 7**

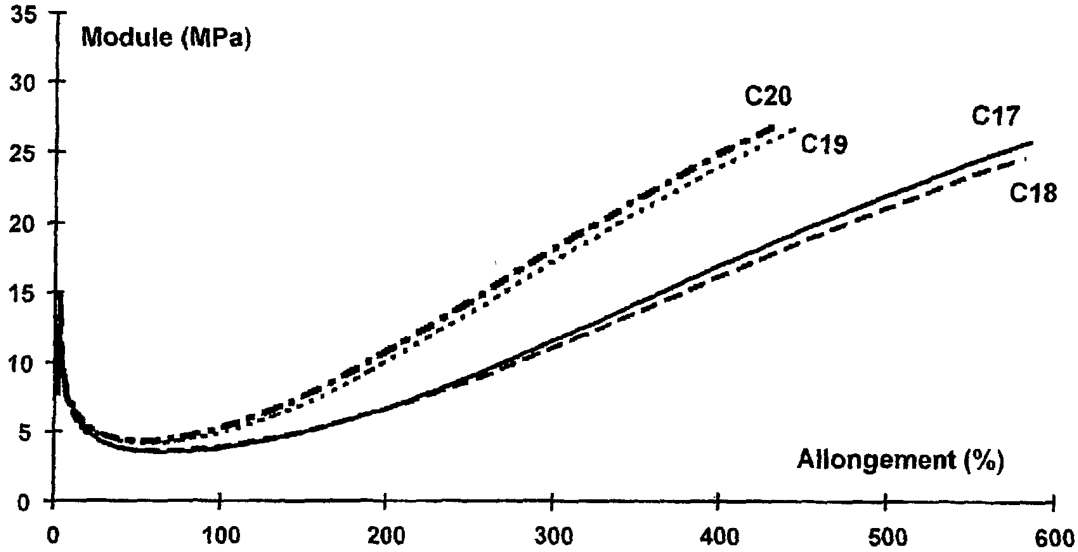
35
30
25
20
15
10
5
0
Module (MPa)
C20
C19
C17
C18
Allongement (%)
0
100
200
300
400
500
600

**Fig. 8**

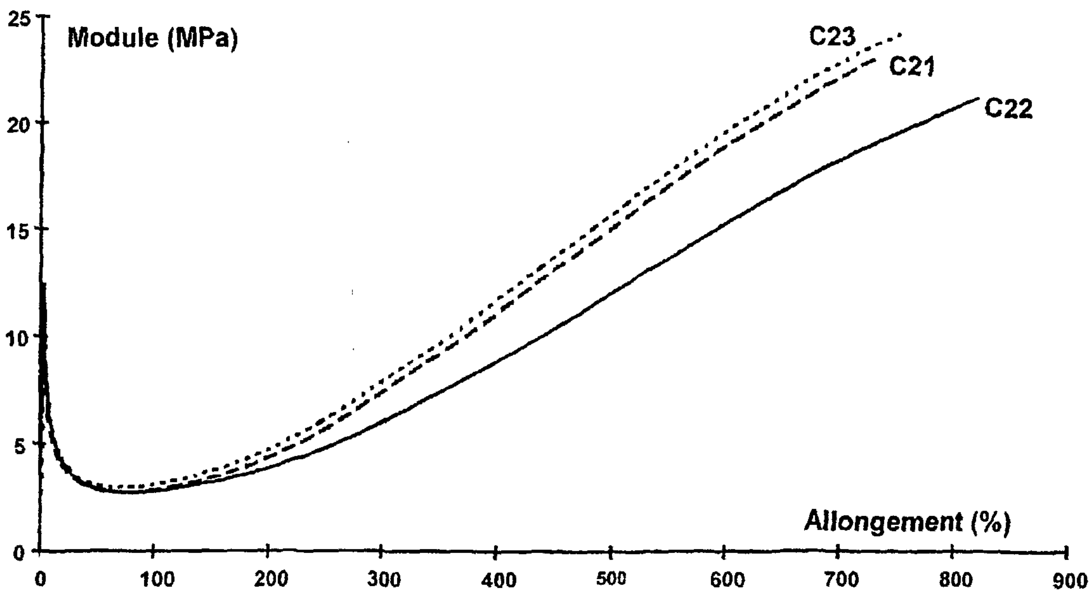
25
20
15
10
5
0
Module (MPa)
C23
C21
C22
Allongement (%)
0
100
200
300
400
500
600
700
800
900

**Fig. 9**

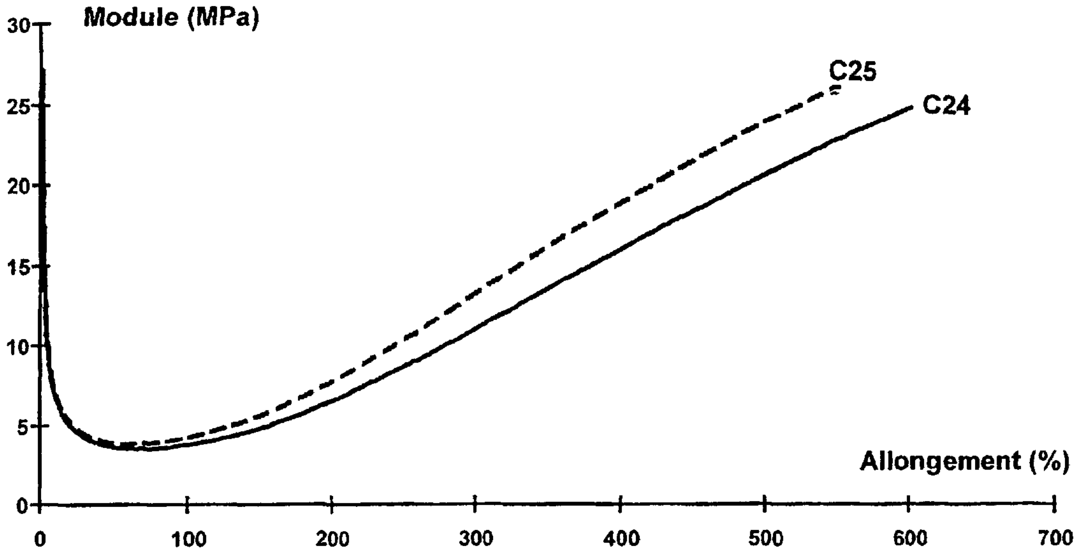
Module (MPa)
30
25
20
15
10
5
0
C25
C24
Allongement (%)
0
100
200
300
400
500
600
700